# EUROPÄISCHE PATENTANMELDUNG

(11) **EP 2 894 360 A1**
(43) Veröffentlichungstag der Anmeldung: **15.07.2015**
(21) Anmeldenummer: 14196104.5
(22) Anmeldetag: 03.12.2014
(51) Int. Cl.: F16C 33/78, F16C 33/80, F16C 23/08

(54) **Wälzlager mit Dichtungseinheit**

(30) Priorität: 19.12.2013 DE 102013226555
(71) Anmelder: Aktiebolaget SKF, 41 550 Göteborg (SE); SKF Economos Deutschland GmbH, 74321 Bietigheim-Bissingen (DE)
(72) Erfinder: Kern, Henning, 97422 Schweinfurt (DE); Back, Femke, 97422 Schweinfurt (DE); Hain, Steffen, 97753 Karlstadt (DE); Hofmann, Matthias, 97422 Schweinfurt (DE); Krebs, Matthias, 69151 Neckargemünd-Dilsberg (DE); Lorenscheit, Jochen, 97222 Rimpar (DE); Pfeuffer, Christina, 97776 Eußenheim (DE); Pickel, Edgar, 97334 Sommerach (DE); Schleyer, Werner, 96182 Reckendorf (DE); Seuberling, Mathias, 97633 Großeibstadt (DE); Bettenhausen, Jens, 97072 Würzburg (DE)
(74) Vertreter: Kuhstrebe, Jochen

(57) **Zusammenfassung**

Ein Wälzlager (10b) umfasst mindestens einen Lagerring (14b; 15b), einen zu dem Lagerring (14b; 15b) um einen begrenzten Winkel verkippbaren weiteren Lagerring (15b; 14b) und eine Dichtungseinheit (12b). Die Dichtungseinheit (12b) umfasst ein an dem Lagerring (14b; 15b) befestigtes, zumindest teilringförmiges Element (16b), wobei das zumindest teilringförmige Element (16b) einen labyrinthförmigen Dichtspalt (18b) begrenzt. Das Element (16b) entspricht einem ersten Begrenzungselement (24b), wobei das Wälzlager (10b) ferner ein zweites Begrenzungselement (26b) und ein an einem Lagerkäfig (32b) befestigtes drittes Begrenzungselement (28b) aufweist, und wobei sich der Dichtspalt (18b) zumindest teilweise zwischen dem ersten Begrenzungselement (24b), dem zweiten Begrenzungselement (26b) und dem dritten Begrenzungselement (28b) erstreckt.

## Beschreibung

Die nachfolgende Erfindung liegt auf dem Gebiet der Abdichtung von Wälzlagern.

Bekannte Dichtungskonzepte für Lager können zwar einen Schutz eines Wälzlagers vor Schmutz und Verunreinigung bieten, sind aber durch das individuell, auf das jeweilige Lager zugeschnittene Design nur auf geringe Fertigungsstückzahlen beschränkt und schwer auf andere Wälzlagergrößen oder gar Wälzlagertypen übertragbar. Außerdem ist ein einfacher Dichtungsaustausch im montierten Zustand nur erschwert möglich, da durch aufwändigen und kostenintensiven Demontageaufwand Umbauteile für den Dichtungstausch entfernt werden. Dies ist insbesondere für Großlager ab einem Durchmesser oder Radius von etwa 400 Millimetern der Fall.

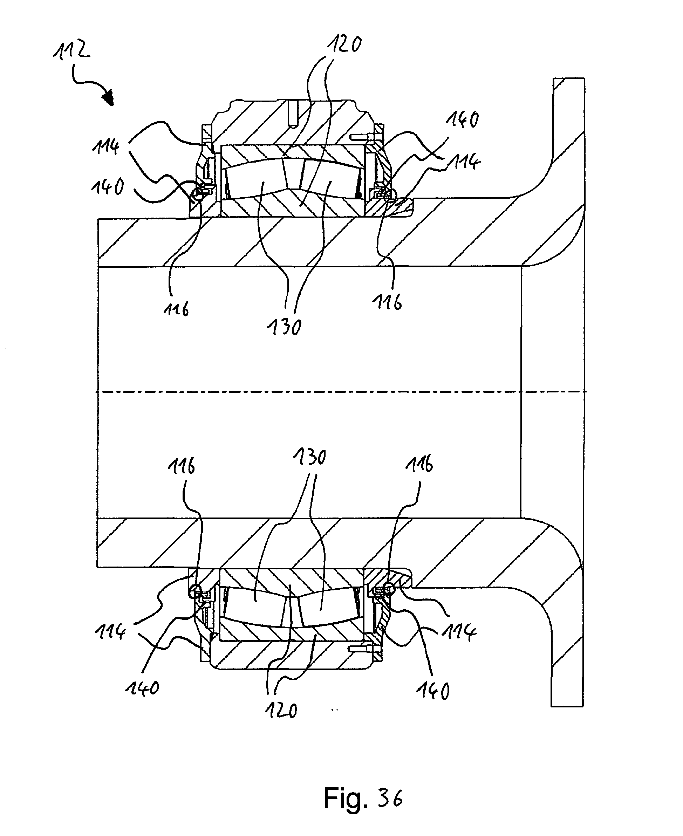

Fig. 36 zeigt eine konventionelle Dichtung eines Großlagers 112 anhand eines Vergleichsbeispiels. Das Großlager 112 wird auf zwei Seiten durch sogenannte Labyrinthe 140 abgedichtet, die durch Labyrinthringe 114 gebildet werden. Die Dichtung setzt sich demnach aus beiderseitig vorgesehenen Labyrinthringen 114 zusammen, die labyrinthförmig ausgebildete Dichtungsspalte, die sogenannten Labyrinthe 140, bilden. Durch die mäanderförmige Geometrie der so gebildeten Labyrinthe 140 kann das Eindringen von Fremdstoffen in den zu dichtenden Bereich, beispielsweise zu den Wälzkörpern 130 oder den Laufflächen der Lagerringe 120, erschwert werden. Alle Zwischenräume des Labyrinths 140 und auch des Wälzlagers 112 können bei dieser Dichtungsvariante gewöhnlich mit Fett oder Schmierstoff gefüllt werden. Außerdem kann ein unterstützender, sogenannter V-Ring 116 am oder im Labyrinth 140 eingesetzt werden. Durch periodisches Nachschmieren kann die Dichtwirkung zusätzlich unterstützt werden. Alle genannten Komponenten können Kostenfaktoren sein. Zudem ragen die das Labyrinth 140 bildenden Labyrinthringe 114 über die Breite des eigentlichen Wälzlagers 112, genauer gesagt über die Breite der Lagerringe 120 hinaus und können dadurch wertvollen Raum innerhalb einer Maschine beanspruchen. Die meist massiven Ausführungen der Labyrinthringe 114, beispielsweise aus Gusseisen wie Grauguss, können durch ihr Eigengewicht zu weiteren Nachteilen bei Montage und Betrieb führen.

Daneben können Großlager auch durch schleifende Dichtringe geschützt werden. Dabei kann es sich im Wesentlichen um Radialwellendichtringe, evtl. mit vorgeschalteter Staubschutzlippe, handeln, die mittels z.B. gegossenen Trägerteilen in Position gehalten werden. Diese Trägerteile können ebenso eine große Masse und damit ein hohes, bei der Montage zu bewegendes Gewicht bedingen. Eine Austauschbarkeit des Dichtringes kann entweder nicht möglich, oder aber mit einem erheblichen Demontage- und Montageaufwand verbunden sein.

Beiden zuletzt genannten Dichtungskonzepten ist die Segregation vom Wälzlager gemein, wodurch eine Befüllung mit Schmierstoff erst im montierten Zustand erfolgen kann. Insofern können die vorgesehenen Dichtungen erst nach Montage der Lager angebracht werden, und eine Schmierstoffbefüllung kann wiederum erst danach erfolgen.

Darüber hinaus sind integrierte Dichtungskonzepte, die rein aus Elastomer z.B. faltenbalgartig ausgeführt sind (siehe Offenlegungsschrift DE 10 2007 036 891 A1), bekannt. Eine werkseitige Vorbefettung kann hier erfolgen. Die notwendige Steifigkeit des Dichtsystems kann für große Lagerdurchmesser jedoch nicht oder nur unzureichend bewerkstelligt werden. Ein Austausch der Dichtung ohne Demontage des Wälzlagers ist auf Grund der geschlossenen Geometrie des Dichtringes zudem, wenn überhaupt, nur erschwert möglich.

Den genannten bestehenden Dichtungskonzepten ist gemein, dass sie nur eine begrenzte maximale Lagerschiefstellung erlauben. Gerade bei winkelbeweglichen Lagern, wie Pendelrollenlager oder Kompakt-Anordnungs-Wälzlager (**C**ompact **A**ligning **R**oller **B**earing (CARB) Toroidal-Rollenlager), kann die maximal mögliche Verkippung eines Lagerinnenrings gegenüber einem Lageraußenring stark eingeschränkt sein. Bei Montage des Lagers oder auch im eigentlichen Betrieb kann dies zu einem Anstoßen des Wälzlagerrollensatzes an das Dichtungselement führen. Schäden am Rollensatz, dem Dichtungselement oder gar des Befestigungsmechanismus am jeweiligen Lagerring können die Folge sein, wodurch erhebliche Instandsetzungskosten verursacht werden können, und die Lebensdauer des Lagers beeinträchtigt werden kann.

Daneben können die Trägerteile der schleifenden Dichtringe auch aus geschweißten Blechkonstruktionen gefertigt und im Wälzlager integriert sein, so dass keine Bauteile über die Wälzlageraußenmaße hinausragen. In diesem Fall sollte eine exakte Ausrichtung/Zentrierung der Dichtlippe zur zugehörigen Dichtungs-Gegenlauffläche über eine definierte Referenzposition an dem die Dichtlippe tragenden Bauteil (z.B. Außenring) erfolgen. Die Referenzposition wird in diesen Fällen durch umlaufende Referenznuten, Referenzflächen, Referenzbohrungen, Referenzkanten o.ä. realisiert. Diese können auf Grund der geforderten Präzision durch aufwändige und hochgenaue Bearbeitungen, wie beispielsweise Hartdrehen, gefertigt werden. Die genannten Verfahren sind mit hohen Fertigungskosten verbunden. Sollten Bauteile zwischen Referenzposition am tragenden Bauteil und der zu zentrierenden Dichtlippe angeordnet sein, müssen diese ebenso exakt positioniert werden, um in Toleranzkettenbetrachtung die notwendige Exaktheit zu wahren. Auch diese Ausrichtungsanforderungen der Bauteile sind mit Aufwand und Kosten verbunden.

Bei allen Dichtungskonzepten mit schleifenden Dichtringen können abhängig von der Güte der gepaarten Oberflächen (Dichtlippe zu Gegenlauffläche) erhebliche Reibungsverluste entstehen. Diese energetischen Verluste könnten die eigentliche Verlustleistung des Wälzlagers bei weitem übersteigen. Des Weiteren sind mit den genannten Reibverlusten auch Verschleißerscheinungen verbunden. Sowohl Dichtring/Dichtlippe wie auch die zugehörige Gegenlauffläche verschleißen über die Betriebsdauer. Ab einem bestimmten Verschleißfortschritt sollte der Dichtring ausgetauscht werden. Bei verschlissenen Gegenlaufflächen gestaltet sich eine Wiederinstandsetzung weitaus schwerer. Etwaige Riefen können bei externen Dichtkonzepten im Felde durch sogenannte Verschleißhülsen eliminiert werden, deren Montage jedoch aufwändig und mit hohen Kosten verbunden ist. Bei integrierten Dichtkonzepten können Instandsetzungsverfahren schwierig oder gar undurchführbar sein.

Es besteht daher ein Bedarf daran, ein verbessertes Konzept zur Abdichtung von Wälzlagern zu schaffen.

Diesem Bedarf trägt ein Wälzlager mit Dichtungseinheit gemäß Patentanspruch 1 Rechnung.

Ausführungsbeispiele schaffen ein Wälzlager mit einer Dichtungseinheit, wobei das Wälzlager mindestens einen Lagerring umfasst, und wobei die Dichtungseinheit ein an dem Lagerring befestigtes, zumindest teilringförmiges Element umfasst. Das zumindest teilringförmige Element begrenzt hierbei einen labyrinthförmigen Dichtspalt.

Bei dem Wälzlager kann es sich beispielsweise um ein Kugellager, ein Tonnenlager, ein Kegelrollenlager, bzw. um ein Lager mit einreihiger oder mehrreihiger Anordnung von Wälzkörpern handeln. Der erste Lagerring kann z.B. an einem Stator befestigt sein. Der zweite Lagerring kann z.B. an einem Rotor befestigt sein. Sowohl der erste Lagerring, als auch der zweite Lagerring könnten jeweils ein innerer Lagerring oder ein äußerer Lagerring sein.

Die Dichtungseinheit ist dabei in manchen Ausführungsbeispielen zumindest teilweise aus einem flexiblen, elastischen Material gefertigt. Hierzu können beispielsweise Elastomere, d.h. bestimmte Arten von Plastik bzw. gummiartige Werkstoffe verwendet werden. Der Begriff "Dichtungseinheit" verweist darauf, dass ein Durchdringen bestimmter Substanzen von einer Seite der Dichtungseinheit auf die andere verhindert werden soll. Zu diesen Substanzen können insbesondere Schmutzpartikel (z. B. Ruß, Feinstaub, Sand oder Schlamm), Gase oder Dämpfe (z. B. Sauerstoff, Dämpfe von Kraftstoffen oder Lösungsmitteln, oder auch Dämpfe giftiger oder korrosiver Substanzen) oder Flüssigkeiten (z. B. Wasser, Säure, Lauge, Öl), aber auch Stoffe wie z. B. Schmierfette zählen. Die Dichtungseinheit könnte zudem zumindest teilweise aus Metall, Metalllegierungen, besonders reibungsarmen Kunststoffen wie z. B. Polytetrafluorethylen (PTFE) oder Kunststoffen mit hoher Steifigkeit gefertigt sein. Kunststoffe hoher Steifigkeit könnten sogenannte Duroplaste sein. Weiterhin könnten die verwendeten Materialien eine Massenproduktion durch Verfahren wie Spritzgießen, Vulkanisieren, etc. ermöglichen. Produktions- und Materialkosten sowie Gewicht könnten somit eingespart werden.

Ein zumindest teilringförmiges Element kann beispielsweise durch einen vollständigen Ring gebildet werden, aber auch durch Teile eines Ringes, beispielsweise durch Segmente. Neben Ringsegmenten sind jedoch auch Ausführungen möglich, bei denen ein Ring beispielsweise aus Teilen mit unregelmäßiger Form zusammengesetzt werden kann. Eine Ausführung in mehreren Teilen eines Ringes könnte die Wartung erheblich erleichtern, da beispielsweise der Ein- und Ausbau derart erfolgen könnte, dass ein vollständiger Ausbau des gesamten Wälzlagers nicht mehr erforderlich ist. Ist das Element beispielsweise segmentiert, kann eine Verbindung der einzelnen Segmente zum Beispiel durch Verbindungsplatten oder Verschraubungen realisiert sein, sie könnten aber auch geklebt oder geschweißt sein.

Die Befestigung kann in Ausführungsbeispielen form-, kraft- oder stoffschlüssig erfolgen. Mögliche Befestigungsmittel könnten beispielsweise eine Schraube, eine Klebefläche, eine Schweißfläche, eine Lötstelle, eine Niete, eine Bohrung, ein Gewinde oder ein Nut und Feder aufweisendes System umfassen.

Die Dichtungseinheit kann in einigen Ausführungsbeispielen zudem in ein bereits bestehendes Wälzlager integriert werden. Durch den einfachen Aufbau könnte das Konzept auf jedes Wälzlager unabhängig von Design, Lagerserie oder Durchmesser angewandt werden. Die Dichtungseinheit könnte so flexibel eingesetzt werden. Im Vergleich zur konventionellen Lösung der Labyrinthdichtung, wie sie beispielsweise in Windenergieanlagen zum Einsatz kommt, könnte der von einem Schmierstoff auszufüllende Raum erheblich reduziert werden. Hierdurch könnte weniger Bedarf an Schmierstoff auftreten. Die Dichtungseinheit kann in einigen Ausführungsbeispielen zudem aus leichtem Material ausgeführt sein. Dies könnte zu einer Materialkostenreduktion, einer Gewichtsreduzierung und damit zu einer erleichterten, zeiteffizienten Montage führen. Eine werkseitige Vorbefettung könnte eine Verunreinigung während der Montage des sonst ungedichteten, offenen Lagers erschweren oder sogar verhindern.

Ein Labyrinth oder ein labyrinthförmiger Dichtspalt bezeichnet eine Struktur, mittels der beispielsweise ein Eindringen von Verschmutzungen erschwert, oder sogar verhindert werden kann. Dies geschieht dadurch, dass jeder mögliche Weg zum Eindringen von Stoffen mindestens eine Richtungsänderung aufweist. Eine solche Richtungsänderung des Weges kann beispielsweise eine Änderung eines Pfades in axialer Richtung zu einem Pfad in radialer Richtung sein. Allgemein kann eine Richtungsänderung einen Punkt bezeichnen, an dem sich zwei Teilabschnitte eines Weges begegnen, sodass sie zwangsläufig einen von 180° verschiedenen Winkel bilden. Mit anderen Worten, ist eine Struktur mittels eines labyrinthförmigen Dichtspaltes abgedichtet, existiert kein geradliniger Weg von einer Außenseite der Struktur zu einer Innenseite der Struktur. Einen geradlinigen Weg zwischen zwei Punkten A und B könnte man sich beispielsweise als direkte Sichtlinie von A nach B vorstellen. In einigen Ausführungsbeispielen ist der labyrinthförmige Dichtspalt zusätzlich mit Schmiermittel befüllbar, um die dichtende Wirkung zu erhöhen. Ein labyrinthförmiger Spalt könnte berührungsfrei sein, d.h. die Komponenten, die den labyrinthförmigen Spalt begrenzen, berühren sich gegenseitig unter Umständen nicht. Am Wälzlager, bzw. der Dichtungseinheit auftretender Verschleiß könnte somit reduziert oder sogar minimiert werden.

Die Dichtungseinheit kann in einigen Ausführungsbeispielen an dem Wälzlager montiert werden, noch bevor das Wälzlager seinem eigentlichen Verwendungszweck zugeführt, also beispielsweise an einen Rotor oder an einen Stator, montiert wird. Eine Befüllung mit Schmiermittel könnte also bereits vor der Montage des Wälzlagers erfolgen.

Optional verläuft der Dichtspalt zumindest teilweise derart, dass der Dichtspalt den Lagerring in axialer Richtung nicht überragt. Mit anderen Worten, für eine Montage relevante Abmessungen des Wälzlagers (Breite, Innendurchmesser, Außendurchmesser) werden durch die Schaffung des labyrinthförmigen Dichtspalts nicht verändert. Oder anders ausgedrückt, kann der Dichtspalt vollständig zwischen zwei Lagerringen liegen. Die Lagerringe können ein innerer und ein äußerer Lagerring sein, und können dabei zumindest teilweise den Dichtspalt begrenzen.

Optional ist das Element in Ausführungsbeispielen blechartig ausgebildet. Ein blechartiges Element kann auch als dünnes Element verstanden werden; mit anderen Worten könnte eine der drei Raumabmessungen (Dicke) sehr klein gegenüber den anderen beiden Raumabmessungen (Länge, Breite) sein. In Ausführungsbeispielen könnte die Dicke jeweils bis zu 1%, 2 %, 5 %, 10%, etc. der Länge oder Breite betragen. Durch die blechartige Ausbildung des Elements könnten Gewicht und Material eingespart werden, sowie damit verbundene Kosten und Aufwand beispielsweise bei der Produktion oder der Wartung. Weiterhin könnte das Volumen der Dichtungseinheit soweit reduziert werden, dass große Mengen an Bauraum eingespart werden. In einigen Ausführungsbeispielen könnte das Element sogar bündig mit dem Lagerring abschließen, den Lagerring also in axialer Richtung nicht überragen. Dadurch könnte es beispielsweise möglich sein, einen von der internationalen Organisation für Normung (International Organisation for Standardisation, ISO (von griech.: isos = gleich)) vorgegebenen Bauraum einzuhalten.

Ergänzend oder alternativ wird der Dichtspalt zusätzlich durch eine Vertiefung in dem Lagerring begrenzt. Eine solche Vertiefung kann beispielsweise eine Nut sein. Auch kann die Nut oder die Vertiefung eine Ausdehnung in axialer Richtung aufweisen, die größer ist als die Dicke (axiale Ausdehnung) des blechartigen Elements. Im Falle eines Pendelrollenlagers, bei dem zwei Lagerringe gegeneinander verkippt werden können, könnte dem Element somit bei Verkippung ein gewisser Spielraum ermöglicht werden. Durch den Spielraum könnte bewirkt werden, dass der Dichtspalt auch bei Verkippung eines Pendelrollenlagers bestehen bleibt, und damit die dichtende Wirkung des Dichtspalts nicht verloren geht.

Der Lagerring weist ergänzend oder alternativ in Ausführungsbeispielen eine mit dem Element in Anlage stehende Dichtlippe auf. Die Dichtlippe kann in manchen Ausführungsbeispielen wenigstens teilweise aus einem Dichtungswerkstoff gefertigt sein. Ein Dichtungswerkstoff kann beispielsweise ein Kunststoff sein, z.B. Polyurethan, Nitrilkautschuk (**N**itrile **B**utadiene **R**ubber, (NBR)), Hydrierter Acrylnitrilbutadien-Kautschuk (**H**ydrated **N**itrile **B**utadiene **R**ubber, (HNBR)); je nachdem, welche Art von Stoff am Ein- oder Ausdringen gehindert werden soll.

Die Dichtlippe kann in manchen Ausführungsbeispielen den Dichtspalt vollständig verschließen. Dadurch könnte die dichtende Wirkung zusätzlich erhöht werden. Die Dichtlippe kann auch in einem spitzen Winkel (kleiner als 90°) an das Element oder den Lagerring angreifen, sodass der spitze Winkel hierbei zu einer Richtung des Dichtspalts hin geöffnet ist, die zu einem Wälzkörper des Wälzlagers hinweist. Dadurch könnte das Eindringen von Stoffen (also z.B. Schmutzpartikel oder Feuchtigkeit) weiter erschwert werden, und beispielsweise ein Austreten überschüssigen Schmiermittels erleichtert werden. Bei Betrieb des Wälzlagers könnte weiterhin auftretende Reibung und damit einhergehender Verschleiß an der Dichtlippe anstatt dem Lagerring abfallen bzw. auftreten, sodass der Verschleiß an dem Lagerring wesentlich geringer ausfallen könnte. Auch wäre ein Aufwand bei einem Austausch (und damit der Wartungsaufwand und die Wartungskosten) für die Dichtlippe nicht so groß wie beispielsweise für den Lagerring.

In manchen Ausführungsbeispielen weist das Element ergänzend oder alternativ entlang seines Verlaufes eine Richtungsänderung von wenigstens 45° auf In anderen Ausführungsbeispielen wiederum könnte eine Richtungsänderung in jeden beliebigen Winkel erfolgen. Ein Verlauf des labyrinthförmig ausgebildeten Ganges, der durch das Element begrenzt wird, kann so um zusätzliche Richtungsänderungen erweitert werden. Ein Eindringen von Verunreinigungen könnte dadurch weiterhin erschwert werden. Die Richtungsänderung vollzieht sich dabei in einer Querschnittsebene, welche eine Rotationsachse des Lagers umfasst. Mit anderen Worten gesagt, weist dann die Querschnittsfläche des Elements die Richtungsänderung auf.

Ergänzend oder alternativ entspricht das Element einem ersten Begrenzungselement, und das Wälzlager umfasst ferner ein zweites Begrenzungselement, wobei sich der Dichtspalt zumindest teilweise zwischen dem ersten und dem zweiten Begrenzungselement erstreckt. In weiteren Ausführungsbeispielen könnte das Element aber genauso gut dem zweiten Begrenzungselement entsprechen. Beide Begrenzungselemente können blechartig, teilringförmig, ringförmig und/oder aus denselben oder aus verschiedenen Werkstoffen gefertigt sein. Der Dichtspalt könnte sogar vollständig zwischen den beiden Begrenzungselementen verlaufen. Durch das Vorhandensein zweier Begrenzungselemente könnte der Dichtspalt zusätzlich verlängert werden, und dadurch seine dichtende Wirkung erhöht werden. Das zweite Begrenzungselement könnte ebenfalls an einem Lagerring befestigt sein.

Bei einem solchen Ausführungsbeispiel, bei dem sich der Dichtspalt zumindest teilweise zwischen dem ersten und dem zweiten Begrenzungselement erstreckt, kann das Wälzlager ergänzend oder alternativ ein an einen Lagerkäfig befestigtes drittes Begrenzungselement aufweisen. Der Dichtspalt erstreckt sich hierbei zumindest teilweise zwischen dem ersten Begrenzungselement, dem zweiten Begrenzungselement und dem dritten Begrenzungselement. Das dritte Begrenzungselement kann überdies dieselben Merkmale wie das erste und zweite Begrenzungselement aufweisen (also z.B. blechförmig, teilringförmig, ringförmig, Herstellung aus denselben Materialien wie das erste und das zweite Begrenzungselement, oder aus anderen Materialien). In manchen Ausführungsbeispielen können sich die zwei oder drei Begrenzungselemente auch insbesondere hinsichtlich dieser Merkmale unterscheiden. Das erste und das zweite Begrenzungselement können dabei beispielsweise an verschiedenen Lagerringen befestigt sein. Ein ungewollter Austritt von Schmiermittel könnte dadurch unterbunden werden. Dies könnte zusätzlich dadurch verbessert oder optimiert werden, dass der zwischen dem ersten Begrenzungselement und dem zweiten Begrenzungselement verlaufende Teil des Dichtspalts möglichst mittig angeordnet wird (d.h. möglichst weit entfernt von beiden Lagerringen).

Ergänzend oder alternativ weist der Dichtspalt in Ausführungsbeispielen zusätzlich eine Beflockung und/oder eine Dichtlippe auf. Eine Beflockung könnte als zusätzlicher Filter dienen, der das Eintreten von Schmutzpartikeln erschwert. Eine Dichtlippe könnte, wie oben bereits beschrieben, den Eintritt von Verunreinigungen erschweren, und gleichzeitig einen Abfluss überflüssigen Schmiermittels weiterhin ermöglichen. Die Dichtlippe könnte wiederum aus Elastomer gefertigt sein, oder allgemein aus Stoffen hoher Flexibilität. Die Beflockung könnte aus Textilfasern gefertigt sein, deren gewünschte Stärke oder Länge je nach Verwendungszweck wählbar ist.

In einigen Ausführungsbeispielen ist ergänzend oder alternativ zumindest das Element austauschbar an dem Lagerring befestigt. Entsprechend kann dies in weiteren Ausführungsbeispielen auch für das erste Begrenzungselement oder das zweite Begrenzungselement der Fall sein. Auch kann das dritte Begrenzungselement austauschbar mit dem Lagerkäfig verbunden sein. Ferner kann in einigen Ausführungsbeispielen die mit dem Lagerring verbundene oder in dem Dichtspalt befindliche Dichtlippe austauschbar mit dem Element oder dem Lagerring verbunden sein. Austauschbar verbindbar bedeutet hierbei, dass eine aufwandsarme Entfernung möglich ist (beispielsweise kein Werkzeuggebrauch), dass eine beschädigungsfreie Entfernung möglich ist, dass eine Verbindung lösbar und wieder herstellbar ist, dass das Element oder die Dichtlippe mehrfach verbindbar, auswechselbar sind oder dass das Element oder die Dichtlippe reversibel verbindbar sind. Montage- und Wartungsprozesse könnten durch die austauschbare Verbindbarkeit beschleunigt und vereinfacht werden. Außerdem könnte so vermieden werden, dass bei einer Entfernung des Elements oder der Dichtlippe, beispielsweise zu Wartungszwecken, diese oder weitere Teile des Lagers durch Beschädigung verschleißen oder gar unbrauchbar gemacht werden.

In Ausführungsbeispielen umfasst das Wälzlager ergänzend oder alternativ einen zu dem Lagerring um einen begrenzten Winkel verkippbaren weiteren Lagerring. Dies kann zum Beispiel in einem Pendelrollenlager der Fall sein. Die maximal mögliche Verkippung zweier Lagerringe gegeneinander kann einen Bruchteil eines Grades, aber auch mehrere Grad, zum Beispiel 2 oder 3 Grad betragen. Die Dichtungseinheit kann in einem Ausführungsbeispiel an einem inneren Lagerring befestigt sein, so dass eine Kollision mit den Wälzkörpern bei einer Verkippung der beiden Lagerringe gegeneinander vermieden werden könnte. Die Verwendung einer Dichtlippe, die zum Beispiel aus Elastomer gefertigt sein kann, könnte dem Lagerring bei Verkippung so viel Spielraum ermöglichen, dass die dichtende Funktion der Dichtlippe auch bei Verkippungen, beispielsweise um ein oder zwei Grad, erhalten bliebe. Ist die Dichtungseinheit an dem äußeren Lagerring befestigt, könnte beispielsweise eine Fertigung der Dichtungseinheit aus Kunststoff bei starker Verkippung beider Lagerringe zueinander Schäden deutlich verringern, die durch eine Kollision der Dichtungseinheit mit den Wälzkörpern entstehen könnten.

Ergänzend oder alternativ weist das Wälzlager einen Außenradius oder einen Außendurchmesser von mindestens 400 mm auf. Der Durchmesser oder der Radius kann radial zu einer Rotationsachse des Lagers gemessen werden. Lager mit einem Außendurchmesser oder -radius von 400 mm oder mehr werden häufig auch als "Großlager" bezeichnet. Großlager können beispielsweise im Bereich der Energiegewinnung (z.B. Windkraftwerke, Unterwasserkraftwerke, Turbinen allgemein) zum Einsatz kommen. Eine Wartung, Montage oder ein Austausch einer konventionellen Dichtung kann bei einem Großlager mit erheblichem Aufwand verbunden sein. Die Ausführung des Elementes in mehreren Scheiben- oder Ringteilen könnte diesen Aufwand erheblich reduzieren. Eine Abdichtung von Großlagern mittels der beschriebenen Dichtungseinheit könnte erhebliche Mengen an Material und somit auch an Gewicht sparen. Auch könnten Fertigungskosten und Fertigungsaufwand in erheblichem Maße reduziert werden. Auch könnte eine Montage der Dichtungseinheit an dem Lager sowohl vor als auch nach der Montage des Lagers selbst erfolgen.

Ferner weist die Dichtungseinheit ergänzend oder alternativ in Ausführungsbeispielen mindestens eine flüssigkeitsdurchlässige Bohrung auf. Sind in die Dichtungseinheit solche sogenannten Fettauslassbohrungen eingearbeitet, könnte z.B. mittels Schläuchen oder direkt an den Bohrungen befestigten Sammelbehältern verbrauchter Schmierstoff effizient und gelenkt abgeführt bzw. zugeführt werden, und die Dosierung des Schmierstoffaustritts über den gebildeten Spalt zusätzlich reguliert werden. Somit könnte eine Verschmutzung umgebender Bauteile und des umgebenden Raumes vermieden werden

Nachfolgend werden unter Bezugnahme auf die beigefügten Figuren Ausführungsbeispiele näher beschrieben und erläutert. Es zeigen:
Fig. 1 eine Detailansicht einer Dichtungseinheit in einem Wälzlager gemäß einem ersten Ausführungsbeispiel;
Fig. 2 ein Wälzlager mit Dichtungseinheit in Aufsicht gemäß einem ersten Ausführungsbeispiel;
Fig. 3 einen Querschnitt durch ein Wälzlager mit Dichtungseinheit in Seitenansicht gemäß einem ersten Ausführungsbeispiel;
Fig. 4 einen Querschnitt durch ein Wälzlager mit Dichtungseinheit in perspektivischer Ansicht gemäß einem ersten Ausführungsbeispiel;
Fig. 5 eine Detailansicht einer Dichtungseinheit in einem Wälzlager gemäß einem zweiten Ausführungsbeispiel;
Fig. 6 eine weitere Detailansicht einer Dichtungseinheit in einem Wälzlager gemäß einem zweiten Ausführungsbeispiel;
Fig. 7 ein Wälzlager mit Dichtungseinheit in Aufsicht gemäß einem zweiten Ausführungsbeispiel;
Fig. 8 einen Querschnitt durch ein Wälzlager mit Dichtungseinheit in Seitenansicht gemäß einem zweiten Ausführungsbeispiel;
Fig. 9 einen Querschnitt durch ein Wälzlager mit Dichtungseinheit in perspektivischer Ansicht gemäß einem zweiten Ausführungsbeispiel;
Fig. 10 eine Dichtlippe gemäß einem dritten Ausführungsbeispiel;
Fig. 11 eine Montage einer Dichtlippe anhand eines dritten Ausführungsbeispiels;
Fig. 12 eine Detailansicht einer Dichtungseinheit mit Dichtlippe in einem Wälzlager gemäß einem dritten Ausführungsbeispiel;
Fig. 13 eine weitere Detailansicht einer Dichtungseinheit in einem Wälzlager gemäß einem dritten Ausführungsbeispiel;
Fig. 14 eine noch weitere Detailansicht einer Dichtungseinheit in einem Wälzlager gemäß einem dritten Ausführungsbeispiel;
Fig. 15 ein Wälzlager mit Dichtungseinheit in Aufsicht gemäß einem dritten Ausführungsbeispiel;
Fig. 16 einen Querschnitt durch ein Wälzlager mit Dichtungseinheit in Seitenansicht gemäß einem dritten Ausführungsbeispiel;
Fig. 17 einen Querschnitt durch ein Wälzlager mit Dichtungseinheit in perspektivischer Ansicht gemäß einem dritten Ausführungsbeispiel;
Fig. 18 eine weitere Variante einer Dichtungseinheit gemäß einem dritten Ausführungsbeispiel;
Fig. 19 eine weitere Variante einer Dichtungseinheit in Detailansicht gemäß einem dritten Ausführungsbeispiel;
Fig. 20 eine noch weitere Variante einer Dichtungseinheit gemäß einem dritten Ausführungsbeispiel;
Fig. 21 eine noch weitere Variante einer Dichtungseinheit in Detailansicht gemäß einem dritten Ausführungsbeispiel;
Fig. 22 eine Detailansicht einer Dichtungseinheit in einem Wälzlager gemäß einem vierten Ausführungsbeispiel;
Fig. 23 eine weitere Detailansicht einer Dichtungseinheit in einem Wälzlager gemäß einem vierten Ausführungsbeispiel;
Fig. 24 ein Anwendungsbeispiel einer Dichtungseinheit gemäß einem vierten Ausführungsbeispiel in einem Pendelrollenlager;
Fig. 25 ein weiteres Anwendungsbeispiel einer Dichtungseinheit gemäß einem vierten Ausführungsbeispiel in einem Pendelrollenlager;
Fig. 26 ein Wälzlager mit Dichtungseinheit in Aufsicht gemäß einem vierten Ausführungsbeispiel;
Fig. 27 einen Querschnitt durch ein Wälzlager mit Dichtungseinheit in Seitenansicht gemäß einem vierten Ausführungsbeispiel;
Fig. 28 einen Querschnitt durch ein Wälzlager mit Dichtungseinheit in perspektivischer Ansicht gemäß einem vierten Ausführungsbeispiel;
Fig. 29 eine Detailansicht einer Dichtungseinheit in einem Wälzlager gemäß einem fünften Ausführungsbeispiel;
Fig. 30 eine Detailansicht einer Dichtungseinheit mit Dichtlippe in einem Wälzlager gemäß einem fünften Ausführungsbeispiel;
Fig. 31 eine Detailansicht einer Dichtungseinheit mit Dichtlippe und Beflockung in einem Wälzlager gemäß einem fünften Ausführungsbeispiel;
Fig. 32 eine Detailansicht einer Dichtungseinheit mit Beflockung in einem Wälzlager gemäß einem fünften Ausführungsbeispiel;
Fig. 33 ein Wälzlager mit Dichtungseinheit in Aufsicht gemäß einem fünften Ausführungsbeispiel;
Fig. 34 einen Querschnitt durch ein Wälzlager mit Dichtungseinheit in Seitenansicht gemäß einem fünften Ausführungsbeispiel;
Fig. 35 eine perspektivische Ansicht einer Dichtungseinheit in einem Wälzlager gemäß einem fünften Ausführungsbeispiel;
Fig. 36 einen konventionellen Aufbau einer Labyrinthdichtung gemäß einem Vergleichsbeispiel.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Im Folgenden verweisen einem Bezugszeichen angehängte Kleinbuchstaben "a", "b", "c", "d" und "e" jeweils auf verschiedene Ausführungsbeispiele. So können etwa die Bezugszeichen "10a" und "10b" zwei Entsprechungen derselben Komponente in jeweils unterschiedlichen Ausführungsformen bezeichnen.

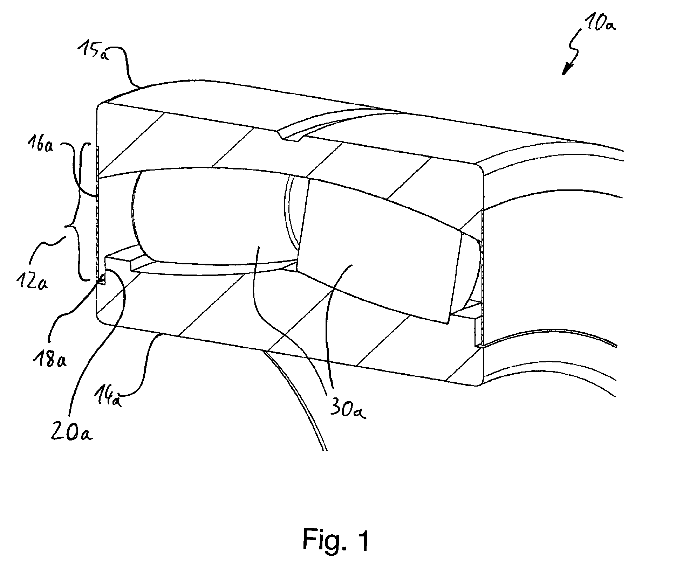

Der Lagerring 14a; 14b; 14c; 14d; 14e; 15a; 15b; 15c; 15d; 15e kann in den nachfolgenden fünf Ausführungsbeispielen (s. Fig. 1-35) ein Lagerinnenring oder ein Lageraußenring sein. Ist er ein Lagerinnenring, wird er fortan mit den Bezugszeichen 14a; 14b; 14c; 14d; 14e bezeichnet. Ist er ein Lageraußenring, wird er fortan mit den Bezugszeichen 15a; 15b; 15c; 15d; 15e bezeichnet. Der weitere Lagerring 15a; 15b; 15c; 15d; 15e; 14a; 14b; 14c; 14d; 14e entspricht in den nachfolgenden Ausführungsbeispielen dem jeweiligen Gegenstück des Lagerrings 14a; 14b; 14c; 14d; 14e; 15a; 15b; 15c; 15d; 15e. Anders ausgedrückt ist der weitere Lagerring 15a; 15b; 15c; 15d; 15e; 14a; 14b; 14c; 14d; 14e ein Innenring, wenn der Lagerring 14a; 14b; 14c; 14d; 14e; 15a; 15b; 15c; 15d; 15e ein Außenring ist, und umgekehrt.

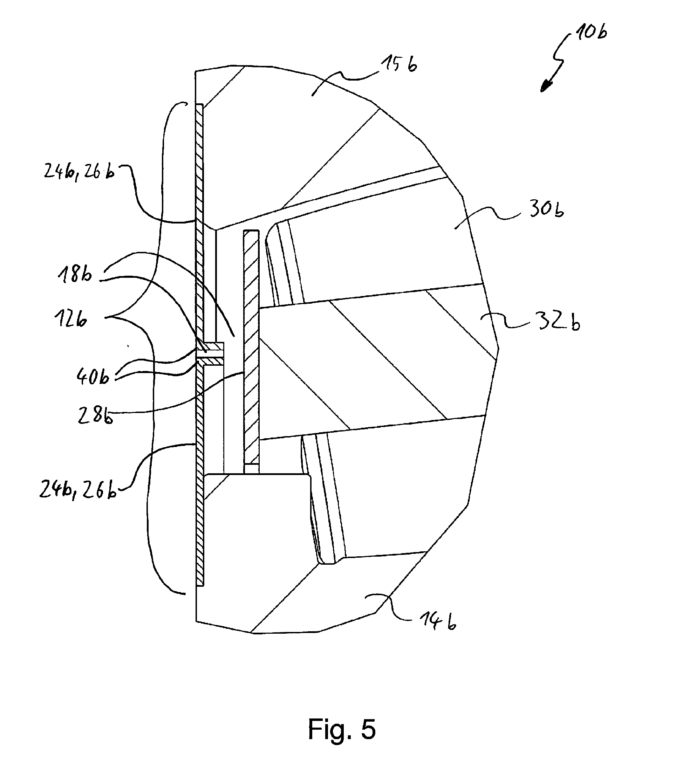

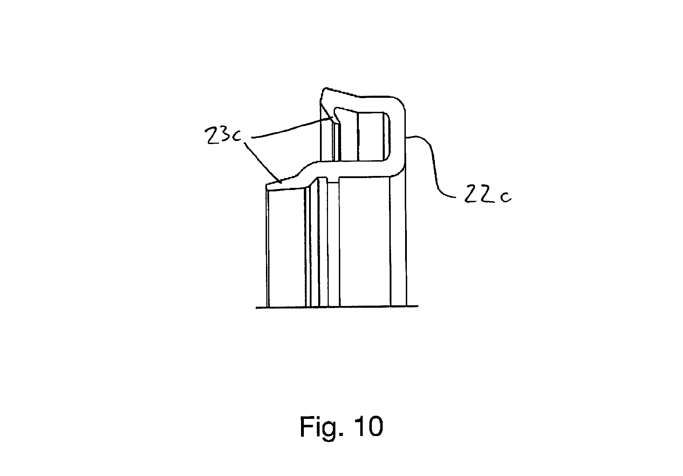

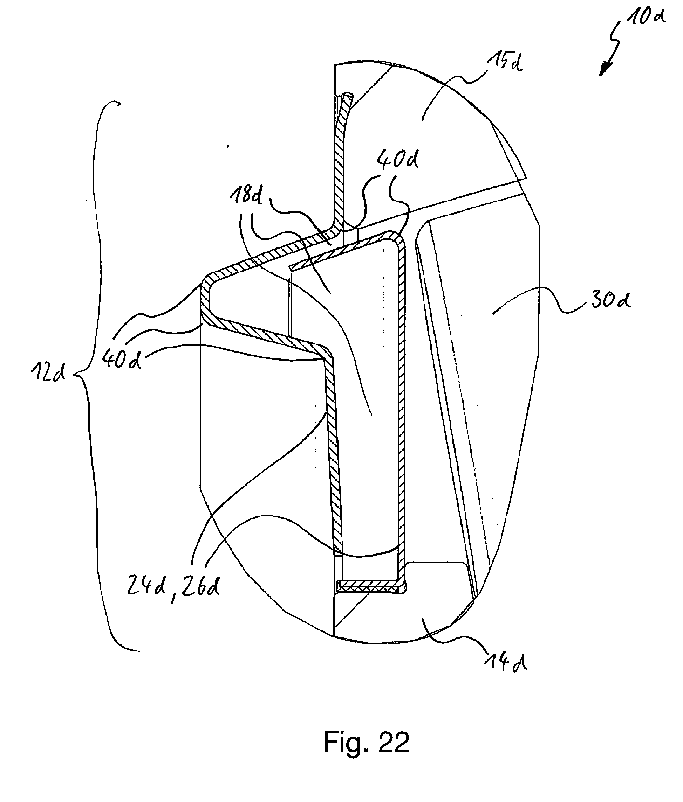

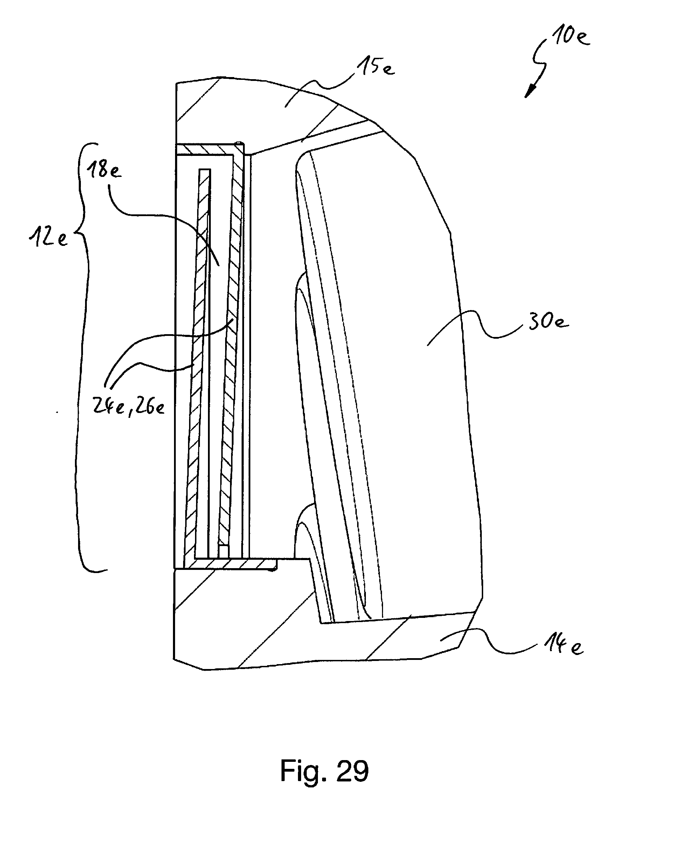

Nachfolgend wird ein erstes Ausführungsbeispiel anhand der Fign. 1-4, ein zweites Ausführungsbeispiel anhand der Fign. 5-9, ein drittes Ausführungsbeispiel anhand der Fign. 10-21, ein viertes Ausführungsbeispiel anhand der Fign. 22-28 und ein fünftes Ausführungsbeispiel anhand der Fign. 29-35 beschrieben.

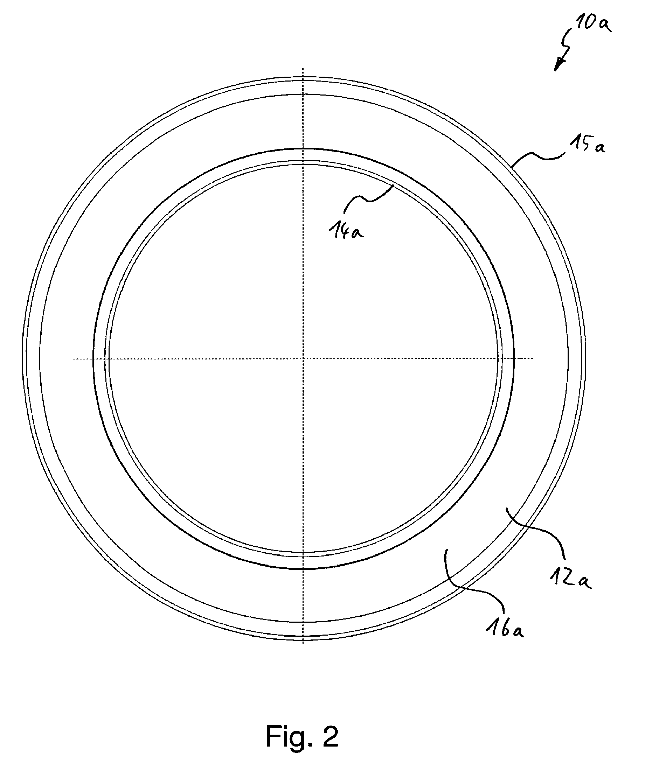

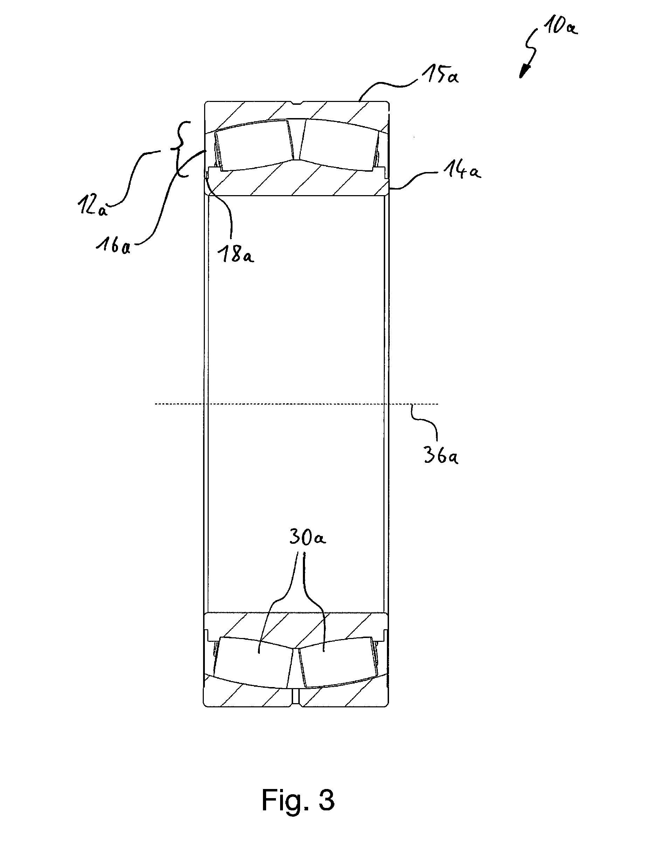

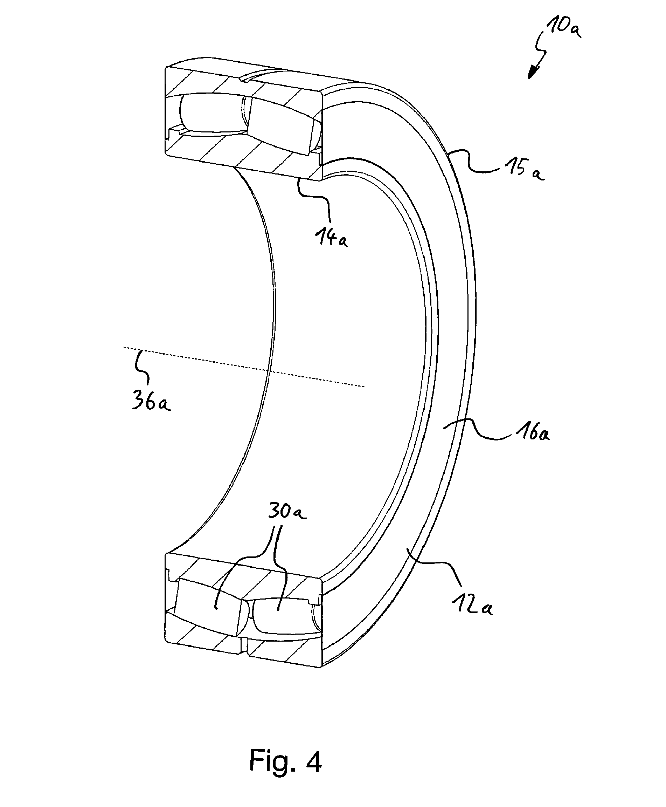

Ausführungsbeispiele beziehen sich auf ein Wälzlager 10a; 10b; 10c; 10d; 10e mit einer Dichtungseinheit 12a; 12b; 12c; 12d; 12e, wobei das Wälzlager 10a; 10b; 10c; 10d; 10e mindestens einen Lagerring 14a; 14b; 14c; 14d; 14e; 15a; 15b; 15c; 15d; 15e umfasst, und wobei die Dichtungseinheit 12a; 12b; 12c; 12d; 12e ein an dem Lagerring 14a; 14b; 14c; 14d; 14e; 15a; 15b; 15c; 15d; 15e befestigtes, zumindest teilringförmiges Element 16a; 16b; 16c; 16d; 16e umfasst. Das zumindest teilringförmige Element 16a; 16b; 16c; 16d; 16e begrenzt dabei einen labyrinthförmigen Dichtspalt 18a; 18b; 18c; 18d; 18e. Fign. 1-4 zeigen ein erstes Ausführungsbeispiel. Fig. 1 zeigt eine Detailansicht einer Dichtungseinheit 12a in einem Wälzlager 10a. Fig. 2 zeigt das Wälzlager 10a mit der Dichtungseinheit 12a in Aufsicht. Fig. 3 zeigt einen Querschnitt durch das Wälzlager 10a mit der Dichtungseinheit 12a in Seitenansicht. Fig. 4 zeigt einen Querschnitt durch das Wälzlager 10a mit der Dichtungseinheit 12a in perspektivischer Ansicht. Es ist teilweise oder vollständig ein Wälzlager 10a zu sehen, welches eine Dichtungseinheit 12a aufweist. Das Wälzlager umfasst einen inneren Lagerring 14a, einen äußeren Lagerring 15a sowie mehrere Wälzkörper 30a in zweireihiger Anordnung. In weiteren Ausführungsbeispielen könnte die Anordnung der Wälzkörper 30a jedoch auch von den hier gezeigten Darstellungen abweichen. Die Dichtungseinheit 12a umfasst ein Element 16a, welches, wie in Fig. 2 ersichtlich wird, einteilig ringförmig ausgebildet ist.

In weiteren Ausführungsbeispielen könnte jedoch auch eine mehrteilige Ausführung möglich sein, beispielsweise aus mehreren Segmenten, die zusammengesetzt einen vollständigen Ring ergeben. Im Falle der segmentierten Ausführung könnte die Verbindung der einzelnen Elemente z.B. durch Kleben, Schweißen, Verschrauben, Klemmen, etc. bewerkstelligt werden. In Fig. 1 wird deutlich, dass das Element 16a den Dichtspalt 18a zu einer Seite hin begrenzt. Ferner ist das Element 16a derart am äußeren Lagerring 15a befestigt, dass das Element 16a mit dem äußeren Lagerring 15a bündig abschließt. Zu diesem Zweck kann am Außenring 15a eine Vertiefung vorhanden sein, in die das Element 16a eingebracht wird. Die Befestigung kann hierbei kraft-, stoff- oder formschlüssig erfolgen. Die Zentrierung des Elements 16a könnte beispielsweise durch eine solche Montage erheblich vereinfacht werden. In den Fign. 1-4 ist die Dichtungseinheit 16a jeweils beidseitig der Wälzkörper 30a vorhanden, aus Gründen einer besseren Übersicht sind Bezugszeichen jedoch nur auf jeweils einer Seite angegeben.

In allen fünf Ausführungsbeispielen kann der Dichtspalt 18a; 18b; 18c; 18d; 18e zumindest teilweise derart verlaufen, dass der Dichtspalt 18a; 18b; 18c; 18d; 18e den Lagerring 14a; 14b; 14c; 14d; 14e; 15a; 15b; 15c; 15d; 15e in axialer Richtung nicht überragt. Mit anderen Worten kann sich der Dichtspalt somit vollständig im "Lagerinneren" befinden, so wie dies beispielsweise in Fig. 1 zu sehen ist. Hierdurch könnte eine Labyrinthdichtung realisiert, und gleichzeitig die Breite des Lagers 10a beibehalten werden. Beispielsweise wird in Fig. 3 erkenntlich, dass die Breite des abgedichteten Lagers 10a (d.h. parallel zu einer Mittelachse 36a) der Breite des äußeren Lagerrings 15a, bzw. des inneren Lagerrings 14a entspricht.

In dem ersten bis fünften Ausführungsbeispiel kann das Element 16a; 16b; 16c; 16d; 16e blechartig ausgebildet sein. In Fign. 1, 3 und 4 wird eine solche blechartige Ausbildung des Elements 16a gezeigt, bei der die Dicke des Elements 16a deutlich kleiner ist als seine Längen- und Breitenabmessungen.

In dem ersten und dritten Ausführungsbeispiel (Fign. 1-4 und 10-21) kann der Dichtspalt 18a; 18c zusätzlich durch eine Vertiefung 20a; 20c in dem Lagerring 14a; 14c; 15a; 15c begrenzt werden. In dem in den Fign. 1-4 gezeigten Ausführungsbeispiel befindet sich die Vertiefung 20a an dem inneren Lagerring 14a. Durch diese Vertiefung 20a wird der Dichtspalt 18a zu einer weiteren Seite hin begrenzt. Weiterhin ist in Fig. 1 erkennbar, dass der Dichtspalt 18a sich in axialer Richtung um mehr als die Dicke des Elements 16a erstreckt. Hierdurch könnte beispielsweise bei Pendelrollenlagern eine Verkippung des inneren Lagerrings 14a gegenüber dem äußeren Lagerring 15a ermöglicht werden. Die Fläche des äußeren Lagerrings 15a, die mit den Wälzkörpern 30a in Berührung steht, also deren Lauffläche, könnte dabei die Form eines Teils einer Kugelschale aufweisen. Die Wälzkörper 30a könnten dann durch ein Profil des inneren Lagerrings 14a bei einer Verkippung mitgeführt werden. Zusätzlich könnte das Element 16a aus einem Material gefertigt sein, welches ein hohes Maß an Flexibilität aufweist, sodass etwa bei einer zu hohen Verkippung des Pendelrollenlagers daraus resultierende Beschädigungen begrenzt werden könnten.

Da bei der in Fig. 1 gezeigten Variante kein direkter Kontakt zwischen statischen und rotierenden Bauteilen vorliegt, könnten keine oder nur geringe energetische Verluste entstehen. Neben der regulären Nachschmierung des Wälzlagers 10a könnten keine weiteren Wartungsarbeiten zur Instandhaltung der Dichtungseinheit 12a notwendig sein. Bei Anwendungen mit langen geforderten Lebensdauern und gleichzeitig schwer zugänglichen Betriebslokalitäten, wie beispielsweise Offshore-Windkraftanlagen, könnte dies zu erheblichen Kosteneinsparungen bei Wartungsarbeiten führen.

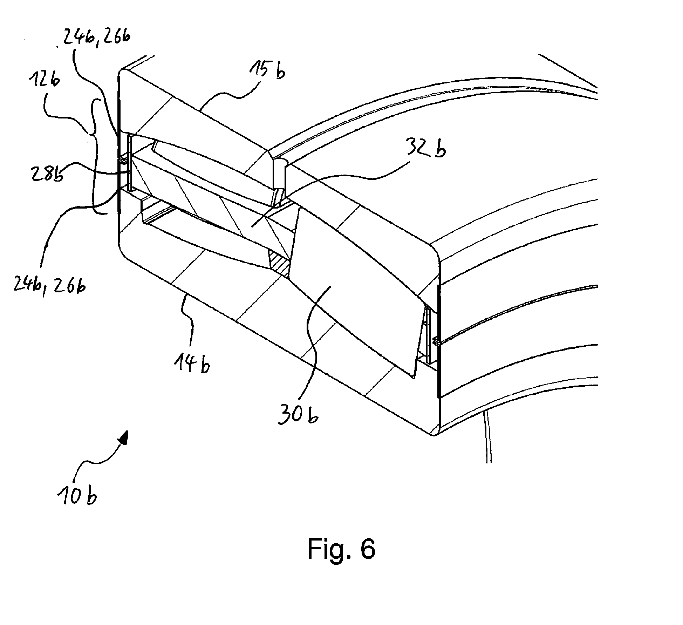

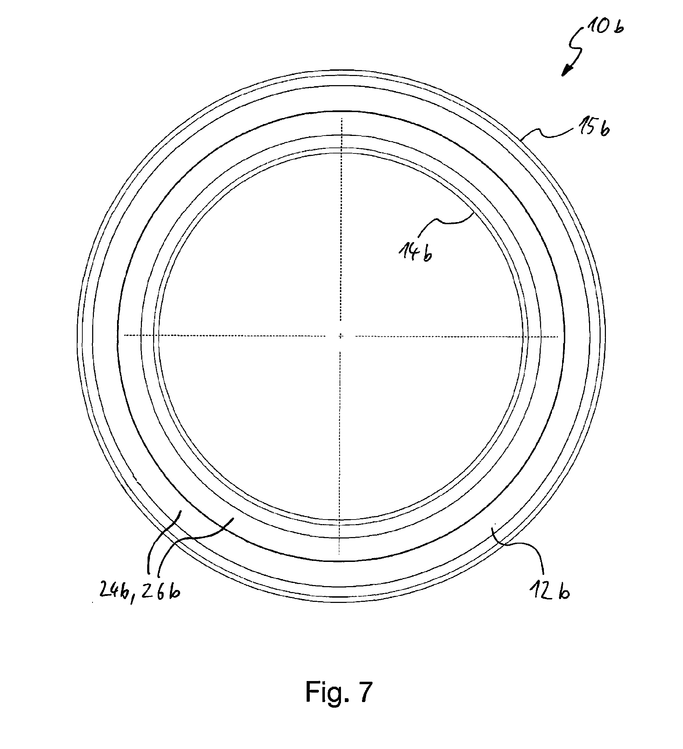

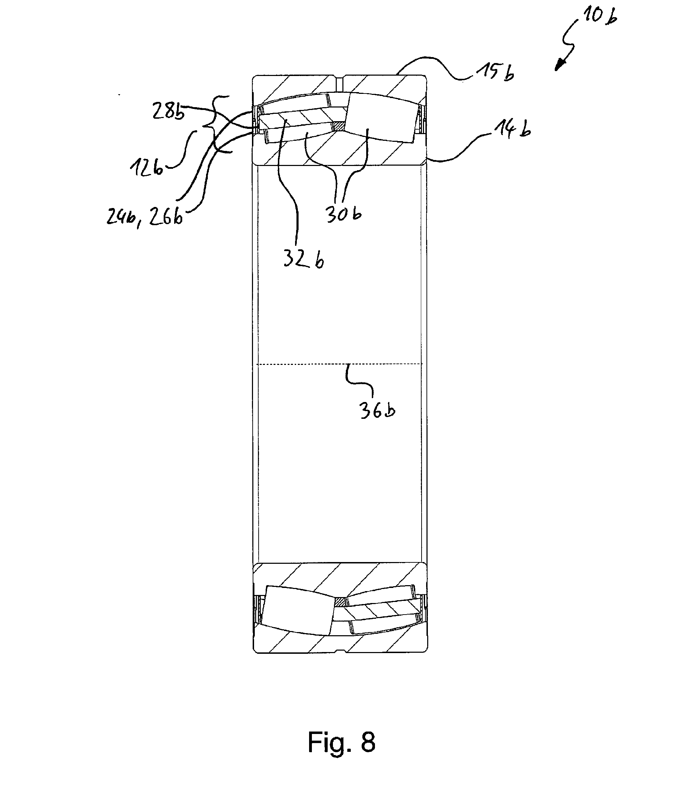

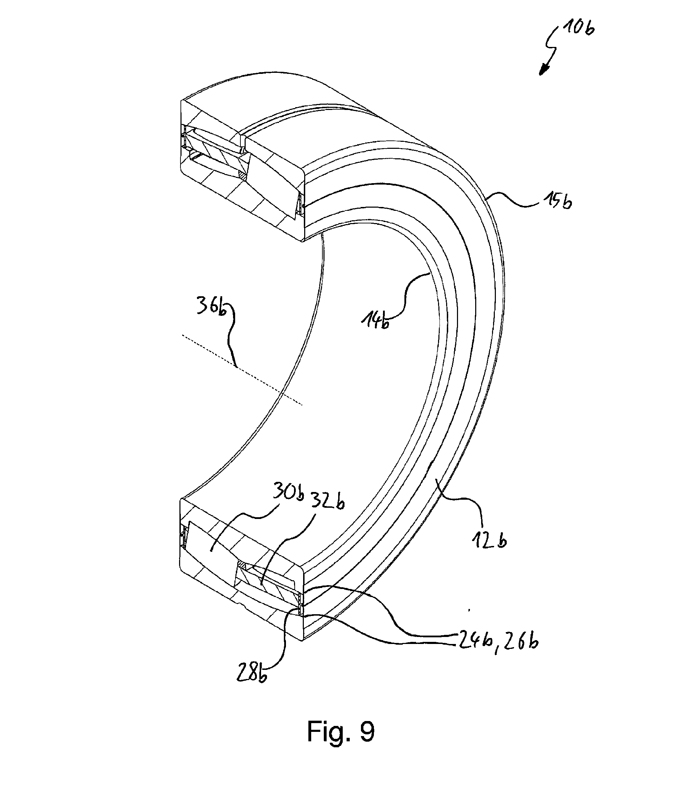

Fign. 5-9 zeigen ein zweites Ausführungsbeispiel. Fig. 5 zeigt eine Detailansicht einer Dichtungseinheit 12b in einem Wälzlager 10b. Fig. 6 zeigt eine weitere Detailansicht einer Dichtungseinheit 12b in einem Wälzlager 10b. Fig. 7 zeigt ein Wälzlager 10b mit Dichtungseinheit 12b in Aufsicht. Fig. 8 zeigt einen Querschnitt durch ein Wälzlager 10b mit Dichtungseinheit 12b in Seitenansicht. Fig. 9 zeigt einen Querschnitt durch ein Wälzlager 10b mit Dichtungseinheit 12b in perspektivischer Ansicht.

In dem zweiten bis vierten Ausführungsbeispiel kann das Element 16b; 16c; 16d entlang seines Verlaufes eine Richtungsänderung 40b; 40c; 40d von wenigstens 45° aufweisen. Außerdem kann in einigen dieser Ausführungsbeispiele das Element 16b; 16d; 16e einem ersten Begrenzungselement 24b; 24d; 24e entsprechen, und das Wälzlager 10b; 10d; 10e kann ferner ein zweites Begrenzungselement 26b; 26d; 26e umfassen, wobei sich der Dichtspalt 18b; 18d; 18e zumindest teilweise zwischen dem ersten Begrenzungselement 24b; 24d; 24e und dem zweiten Begrenzungselement 26b; 26d; 26e erstreckt. Fig. 5 zeigt zwei Begrenzungselemente 24b und 26b, die jeweils an dem inneren Lagerring 14b und an dem äußeren Lagerring 15b befestigt sind. Beide Begrenzungselemente 24b und 26b können hierbei dem Element 16b entsprechen. Weiterhin weisen beide Begrenzungselemente 24b und 26b jeweils eine Richtungsänderung 40b auf, die im zweiten Ausführungsbeispiel bei beiden 90° beträgt. Der Dichtspalt 18b erstreckt sich dabei teilweise zwischen den Begrenzungselementen 24b und 26b. Beide Begrenzungselemente 24b und 26b schließen wiederum bündig mit den jeweiligen Lagerringen 14b und 15b ab, sodass der Dichtspalt 18b die jeweils gegenüberliegenden Lagerringe 15b und 14b in axialer Richtung nicht überragt. Ferner befindet sich der Dichtspalt 18b in der Mitte zwischen den Lagerringen 14b und 15b, wodurch ein ungewolltes Austreten von Schmiermittel erschwert werden könnte.

In manchen Ausführungsbeispielen weist das Wälzlager 10b ein an einem Lagerkäfig 32b befestigtes drittes Begrenzungselement 28b auf. Der Dichtspalt 18b erstreckt sich hierbei zumindest teilweise zwischen dem ersten Begrenzungselement 24b, dem zweiten Begrenzungselement 26b und dem dritten Begrenzungselement 28b. In Fig. 5 verläuft der Dichtspalt teilweise zwischen den Begrenzungselementen 24b und 26b, und zu einem weiteren Teil zwischen dem dritten Element 28b, und einem der Begrenzungselemente 24b und 26b. Dadurch, dass der Dichtspalt in seinem Abschnitt zwischen den Elementen 24b und 26b zumindest näherungsweise mittig liegt, wird der Pfad verlängert, den ein eindringendes Schmutzpartikel beispielsweise nehmen müsste. Das Eindringen von Schmutz könnte hiermit zusätzlich erschwert werden. Das dritte Begrenzungselement 28b ist ferner an einem Lagerkäfig 32b befestigt. Die Befestigung kann dabei kraft-, stoff- oder formschlüssig erfolgen. Ferner könnte durch diese Anordnung eine Kollision der Wälzkörper mit einem der Begrenzungselemente 24b; 26b oder 28b im Falle einer Verkippung oder Axialbewegung des inneren Lagerrings 14b gegenüber dem äußeren Lagerring 15b vermieden werden. Eine gestrichelte Linie in Fig. 8 und Fig. 9 markiert die Mittelachse 36b, die im nicht verkippten Zustand des Lagers 10b gleichzeitig die Rotationsachse ist. Die Mittelachse 36b verläuft durch den Kreuzungspunkt zweier gestrichelter Linien in Fig. 7.

Bei winkelbeweglichen Lagern wie z.B. Pendelrollenlagern oder CARB Toroidallagern oder axial verschiebbaren Wälzlagern wie z.B. Zylinderrollenlager könnte durch die im zweiten Ausführungsbeispiel beschriebene Abkantung (d.h. die Richtungsänderung 40b) der Begrenzungselemente 24b und 26b zum Dichtspalt 18b hin auch das Eindringen von Verunreinigungen erschwert werden. Abhängig von der erwarteten Verkippung oder Verschiebung von Innenring 14b zu Außenring 15b ist das Ausmaß der Abkantung wählbar.

Abhängig von der Wahl des Dichtspaltes 18a; 18b in dem ersten und zweiten Ausführungsbeispiel könnte die notwendige Winkelbeweglichkeit bei CARB Toroidal oder Pendelrollenlagern gewährleistet werden. Bei nicht-winkelbeweglichen Wälzlagern 10a; 10b kann der Dichtspalt 18a; 18b entsprechend enger wählbar und eine gesteigerte Dichtfunktion erzielbar sein.

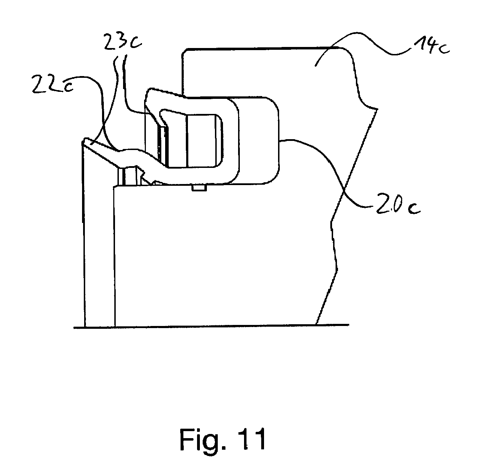

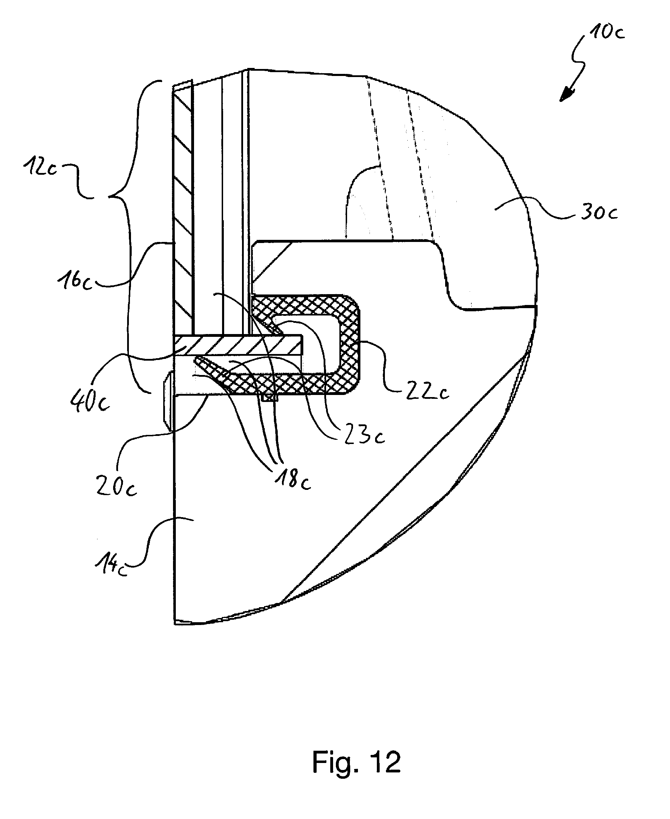

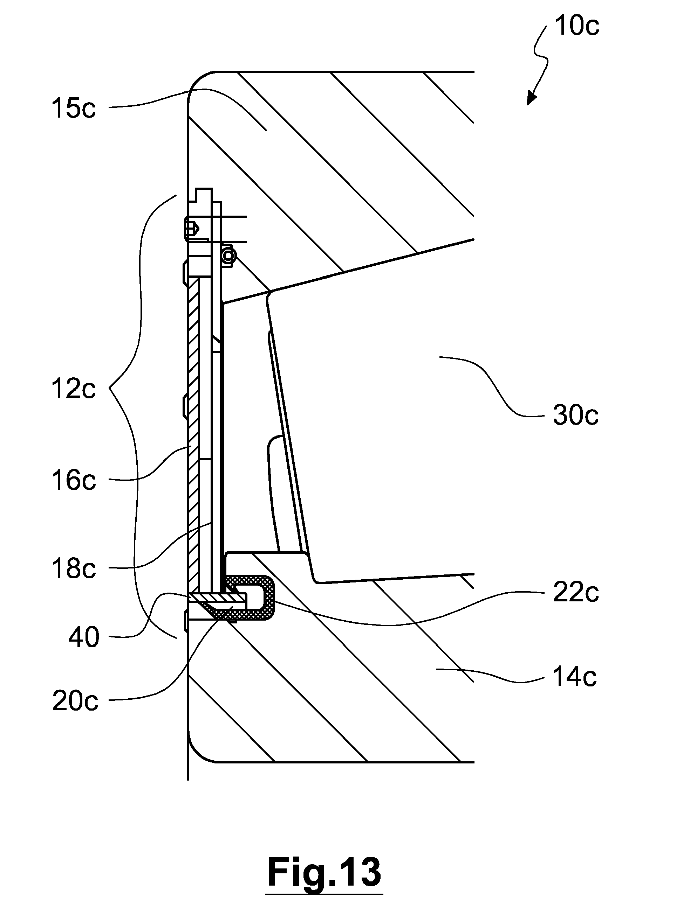

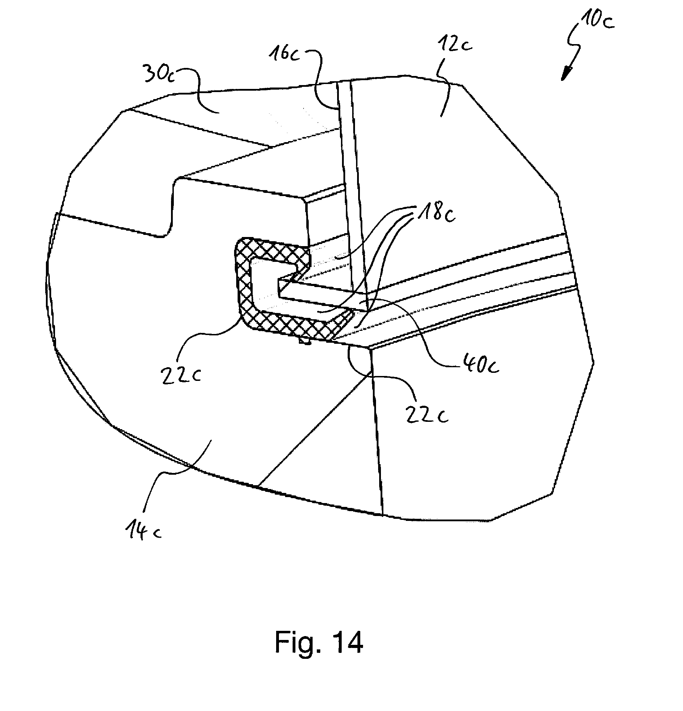

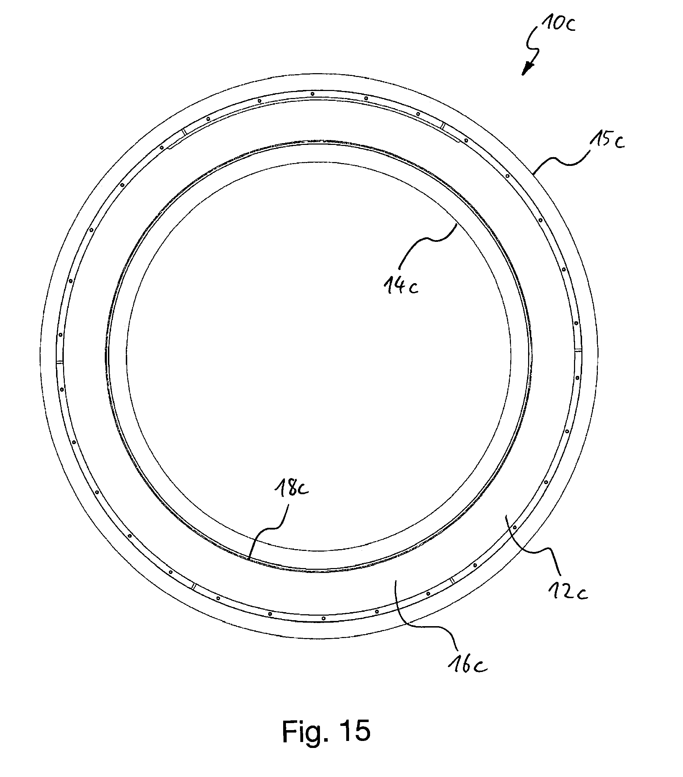

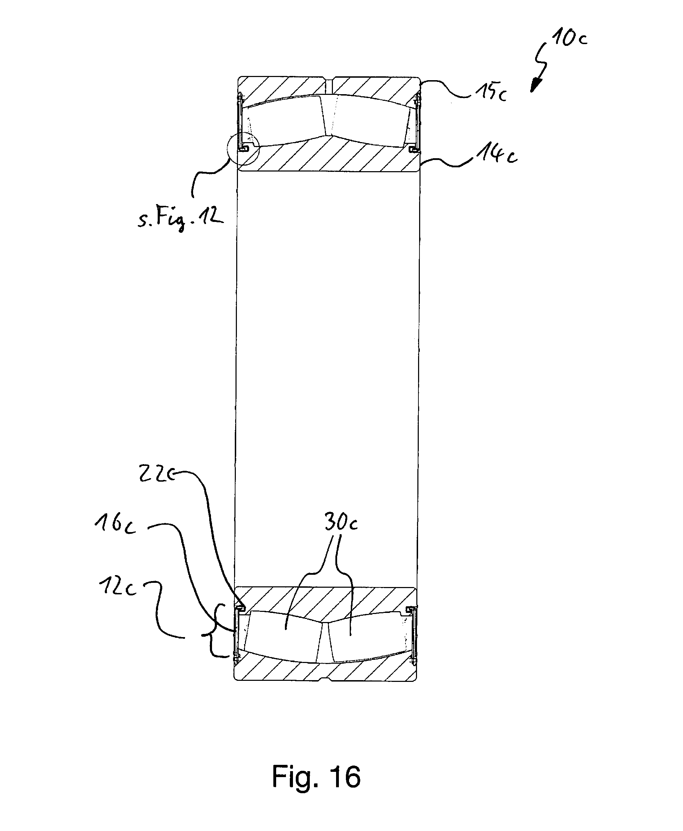

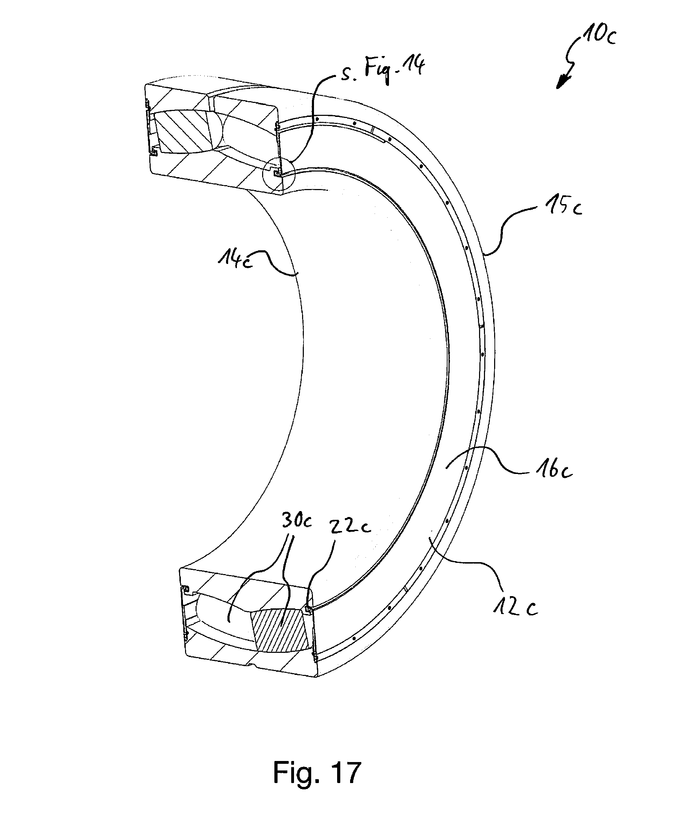

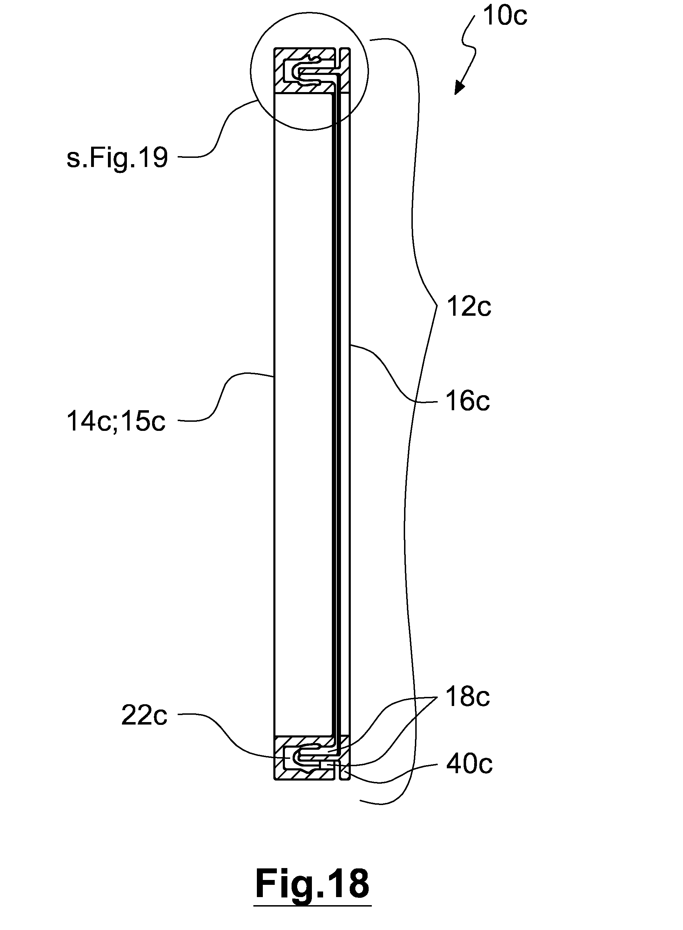

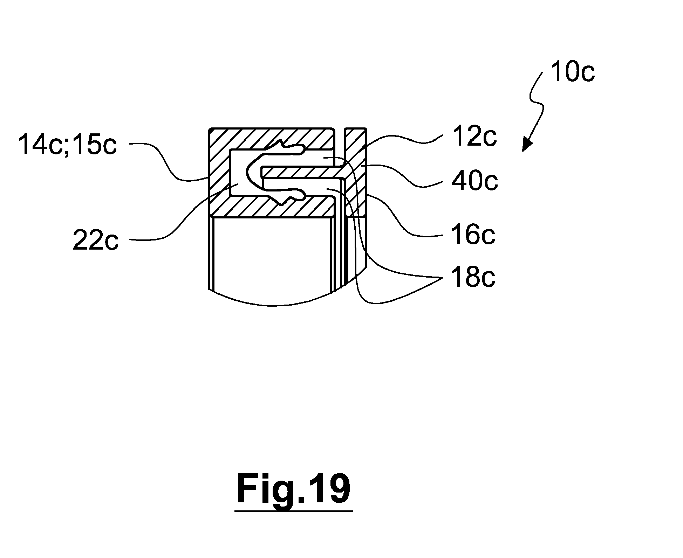

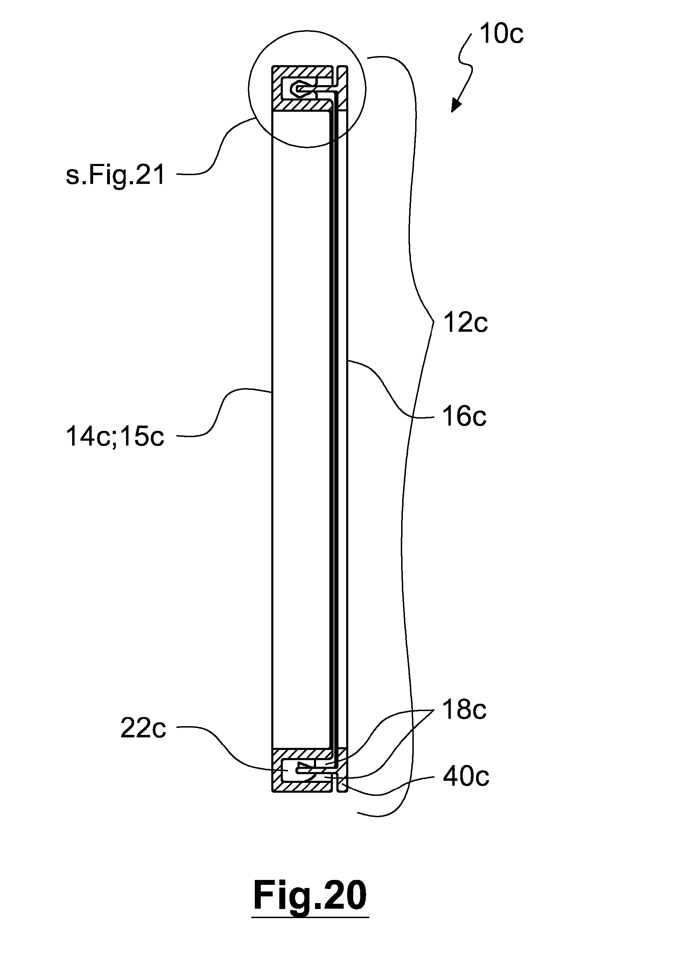

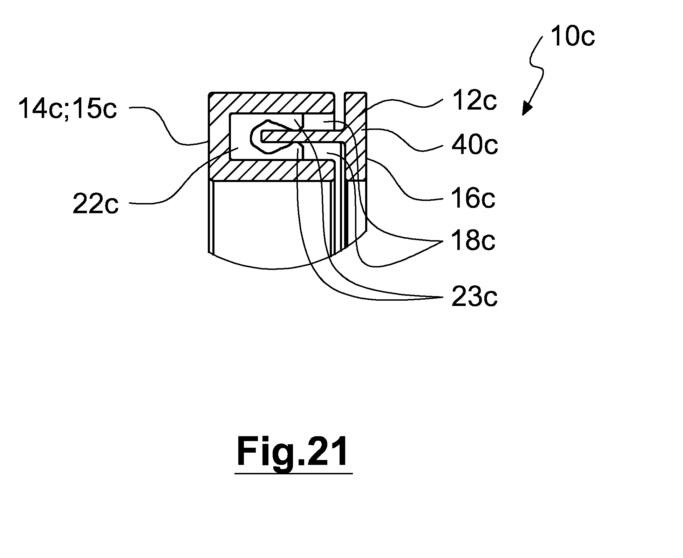

Fign. 10-21 zeigen ein drittes Ausführungsbeispiel. Fig. 10 zeigt eine Dichtlippe 22c. Fig. 11 zeigt eine Montage der Dichtlippe 22c. Fig. 12 zeigt eine Detailansicht einer Dichtungseinheit 12c mit der Dichtlippe 22c in einem Wälzlager 10c. Fig. 13 zeigt eine weitere Detailansicht der Dichtungseinheit 12c in dem Wälzlager 10c. Fig. 14 zeigt eine noch weitere Detailansicht der Dichtungseinheit 12c in dem Wälzlager 10c. Fig. 15 zeigt das Wälzlager 10c mit der Dichtungseinheit 12c in Aufsicht. Fig. 16 zeigt einen Querschnitt durch das Wälzlager 10c mit der Dichtungseinheit 12c in Seitenansicht. Fig. 17 zeigt einen Querschnitt durch das Wälzlager 10c mit der Dichtungseinheit 12c in perspektivischer Ansicht. Fig. 18 zeigt eine weitere Variante der Dichtungseinheit 12c. Fig. 19 zeigt die weitere Variante der Dichtungseinheit 12c in Detailansicht. Fig. 20 zeigt eine noch weitere Variante der Dichtungseinheit 12c. Fig. 21 zeigt die noch weitere Variante der Dichtungseinheit 12c in Detailansicht.

Das in Fign. 10-21 gezeigte, dritte Ausführungsbeispiel beschreibt genauer gesagt eine Dichtungseinheit 12c für Wälzlager 10c (z.B. Großlager), die ein, z.B. am Außenring 15c montiertes, stehendes Element 16c (hier auch als Labyrinthring bezeichnet) und eine, das stehende Element 16c berührende, z.B. im Innenring 14c montierte, drehende Dichtlippe 22c (extrudiertes oder gedrehtes Elastomerelement) in einer Nut 20c umfasst. Beide Teile können in einem Ausführungsbeispiel getrennt voneinander montierbar sein, was Montage, Wartung, Austausch der Dichtungseinheit 12c und Kontrolle des Lagers 10c vereinfachen könnte. Durch die Montage der Dichtungseinheit 12c im Lager 10c, z.B. mit der geringsten überhaupt möglichen Entfernung zum Drehpunkt des Lagers 10c, könnte eine erhöhte Winkelbeweglichkeit des abgedichten Lagers 10c (bis zu einigen Grad) bzw. eine große axiale Verschiebbarkeit sichergestellt werden. Durch die Ausgestaltung der Dichtlippe 22c könnte ein Durchfluss von Schmiermitteln vom Inneren des Lagers 10c nach außen möglich werden. Die Dichtlippe 22c ist in manchen Ausführungsbeispielen beim Einschieben in die Nut 20c im Innenring 14c dermaßen verformbar, dass die Dichtfläche(n) 23c der Dichtlippe 22c mit einer definierten Kraft an der Gegenlauffläche (Labyrinthring) anliegen, dadurch gut abdichten, und genug Flexibilität aufweisen um eine Winkelbeweglichkeit des Lagers 10c zu gestatten. Sowohl die Dichtlippe 22c als auch das Element 16c können kostengünstige Verschleißteile darstellen, die leicht ersetzbar sind, wobei eine Demontage des gesamten Lagers 10c oder aber eine Nacharbeitung spezieller Laufflächen für die Dichtung (z.B. Einsatz einer sogenannten Abnutzungsmanschette (engl. Wearsleeve), also einer Manschette, die zusätzlich auf einer Verschleißfläche montiert wird, sodass die Abnutzung der Verschleiß fläche reduziert wird) vermieden werden könnte.

Die Dichtlippe 22c kann, wie Fig. 10 zeigt, einstückig ausgebildet sein. Ferner kann die Dichtlippe 22c wenigstens zwei Dichtflächen 23c aufweisen, welche auf einander zugewandten Seitenflächen der Dichtlippe 22c angeordnet sind. Die in Fig. 10 gezeigte Dichtlippe 22c kann beispielsweise ein extrudiertes oder gedrehtes Profil sein. Extrudierte Profile eignen sich beispielsweise für die Anwendung des gleichen Profils für unterschiedliche Durchmesser bzw. zum Austausch oder zur Reparatur. Die Geometrie der Dichtlippe 22c kann in einigen Ausführungsbeispielen in nicht montiertem Zustand geöffnet sein, d.h. die eigentlichen Dichtflächen 23c können "gespreizt" sein.

Wird die Dichtung 22c in die Vertiefung 20c des Lagerinnenrings 14c (hier als Nut ausgebildet) geschoben, können sich die Dichtflächen 23c "schließen", wie in Fig. 11 gezeigt. Mit anderen Worten wird durch das Einbringen in die Vertiefung 20c ein Abstand zwischen den zwei Dichtflächen 23c verringert. Das Verringern kann dabei derart erfolgen, dass bei einem Einfädeln eines Labyrinthrings (z.B. Element 16c) die Dichtflächen 23c einen Anpressdruck auf jeweils eine Seitenfläche des Elements 16c ausüben. Die Seitenflächen des Elements 16c können dabei einander abgewandt sein. Ferner wird durch die Dichtlippe 22c und durch das Element 16c ein Labyrinthspalt eingegrenzt. Der Labyrinthspalt weist dabei in seinem Verlauf zwischen den beiden Dichtflächen 23c eine Richtungsänderung von insgesamt 180° auf. Ein Bereich des Labyrinthspaltes wird dabei von den Dichtflächen 23c jeweils nach innen und nach außen hin abgedichtet. Der Begriff "innen" bezieht sich dabei auf einen von dem Lager 10c eingeschlossenen Raum, welcher auch die Wälzkörper umfasst. Die Dichtflächen 23c sind in gleitendem Kontakt zu dem Element 16c gelagert. Ferner sind die Dichtflächen 23c derart geneigt, dass deren Berührungspunkte mit dem Element 16c nach außen weisen, oder anders ausgedrückt, in eine Richtung weisen, welche einem Verlauf des Labyrinthspaltes von den Wälzkörpern weg folgt. Hierdurch kann ein Eindringen von Verunreinigungen oder Feuchtigkeit in eine der Richtung entgegengesetzten Gegenrichtung (nach innen) weiter erschwert werden. Bei einem späteren Einfädeln des Labyrinthrings, also des Elements 16c, in axialer Richtung können sich die Dichtflächen 23c dabei auf eine vorher definierte Weise an die Gegenlauffläche anlegen und auf die Weise abdichten (siehe Fig. 12). Die Dichtflächen 23c können so gestaltet sein, dass das Eindringen von Verunreinigungen von außen erschwert wird, ein Öffnen nach außen jedoch möglich ist (z.B. durch hohen Druck, sodass beispielsweise überflüssiger Schmierstoff abgegeben werden kann, z.B. bei Nachschmierung). Die Dichtlippe 22c kann dabei noch vor dem Element 16c montiert werden.

In dem ersten und dritten Ausführungsbeispiel kann der Lagerring 14a; 14c; 15a; 15c eine mit dem Element 16a; 16c in Anlage stehende Dichtlippe 22a; 22c aufweisen. Mögliche Ausführungen sind im dritten Ausführungsbeispiel, in unterschiedlichen Varianten, in den Fign. 12 bis 21 gezeigt.

Fign. 13 bis 17 zeigen eine erste Variante des dritten Ausführungsbeispiels. Am Außenring 15c des Lagers 10c ist das, hier L-förmig ausgebildete, Element 16c angebracht. In der in Fign. 13 und 14 verwendeten Ausführung ist das Element 16c in einer Nut im Außenring 15c geklemmt. Zur Befestigung könnten aber auch andere kraft-, form- oder stoffschlüssige Methoden angewandt werden. In Fig. 15 wird ersichtlich, dass das Element 16c ringförmig ausgebildet ist. Wie auch bei vorherigen Ausführungsbeispielen besteht hier die Möglichkeit, das Element 16c beispielsweise teilringförmig, also etwa segmentartig, aufzubauen. In einigen Ausführungsbeispielen ist das Element 16c massiv ausgeführt, d.h. ein Drehteil aus Guss oder Stahl, oder auch eine Schweißkonstruktion, um nur einige Beispiele zu nennen. Die Gegenlauffläche zu der Dichtlippe 22c (der kurze Schenkel) könnte beispielsweise bei geringer Oberflächenrauigkeit und Formtoleranzen eine gute Lauffläche für die Dichtlippe 22c bieten. Durch die Arretierung des Elements 16c im Außenring 15c könnte eine gute Zentrierung zum Innenring 14c, und dadurch eine hohe Laufgenauigkeit bewirkt werden.

Zudem wird in Fign. 13 und 14 ersichtlich, dass zwischen der Dichtlippe 22c und dem Element 16c ein Spielraum vorhanden ist, sodass Verkippungen oder Axialbewegungen möglich werden. Die Dichtungseinheit 12c könnte also auch in Pendelrollenlagern zum Einsatz kommen, wie beispielsweise in Fign. 16 und 17 gezeigt.

Fign. 18 und 19 zeigen eine weitere Variante einer Dichtungseinheit 12c gemäß dem dritten Ausführungsbeispiel. Ein Kreis in Fig. 18 markiert einen Bildausschnitt, der in Fig. 19 nochmals vergrößert dargestellt ist. Das Element 16c weist wiederum eine Richtungsänderung 40c auf. Wie in der vorangegangenen Variante beträgt die Richtungsänderung auch hier 90°. Weiterhin ist das Element in Fign. 18 und 19 T-förmig ausgebildet, wodurch der labyrinthförmige Dichtspalt 18c eine zusätzliche Richtungsänderung erfährt. Die abdichtende Wirkung könnte damit erhöht werden. Der in Fign. 18 und 19 gezeigte Lagerring 14c, 15c kann sowohl ein innerer als auch ein äußerer Lagerring sein. Zwischen dem Element 16c und der Dichtlippe 22c ist genügend Spielraum vorhanden, um die Dichtungseinheit 12c beispielsweise auch in Pendelrollenlagern oder bei Axialverschiebung des Lagers 10c nutzbar zu machen.

Eine noch weitere Variante einer Dichtungseinheit 12c gemäß dem dritten Ausführungsbeispiel zeigen die Fign. 20 und 21. Ein in Fig. 20 mit einem Kreis markierter Bildausschnitt ist in Fig. 21 vergrößert dargestellt. Das Element 16c ist, wie in der vorangegangenen Variante, T-förmig ausgebildet. Die Dichtlippe 22c weist zwei Dichtflächen 23c auf, die in einem spitzen Winkel auf den kurzen Schenkel des Elements 16c zulaufen. Die beiden Berührungswinkel sind derart angeordnet, dass dadurch ein Durchdringen von Stoffen entlang des labyrinthförmigen Dichtspalts 18c an der Dichtlippe 22c vorbei deutlich erschwert werden könnte. Mit anderen Worten könnte dadurch das Austreten von Schmiermittel sowie das Eindringen von Verunreinigungen oder Feuchtigkeit unterbunden werden. Im Vergleich dazu zeigt Fig. 13 beispielsweise eine Dichtlippe 22c, welche durch die Anordnung ihrer Dichtflächen 23c einen geregelten, kontrollierten Abfluss überschüssigen Schmiermittels ermöglichen könnte. Bei der in Fig. 21 gezeigten Anordnung sind weiterhin die Dichtflächen 23c der Dichtlippe 22c derart ausgerichtet, dass deren Klammerwirkung, und damit die Abdichtung an dem Schenkel des Elements 16c, durch entsprechenden Anpressdruck des Elements 16c verstärkt werden könnte. In anderen Worten ist die Dichtlippe 22c so ausgelegt, dass sich die Dichtflächen 23c aufeinander zu bewegen, wenn der Schenkel des Elements 16c auf den inneren Bereich der Dichtlippe 22c zwischen den Dichtflächen 23c drückt.

Durch die Integration der Dichtungseinheit 12c in das Lager 10c könnte der ISO-Bauraum beibehalten werden. Die Dichtungseinheit 12c lässt ferner eine hohe Winkel- und Axialbeweglichkeit des Lagers 10c zu. Bei Verschleiß und damit einhergehendem Austausch der Dichtungseinheit 12c könnte keine Demontage des Lagers 10c erforderlich sein, was z.B. in Windkraftanwendungen relevant sein könnte. Zudem könnte die austauschbare Verbindung der Dichtungseinheit 12c ein Nachschmieren des Lagers 10c gestatten.

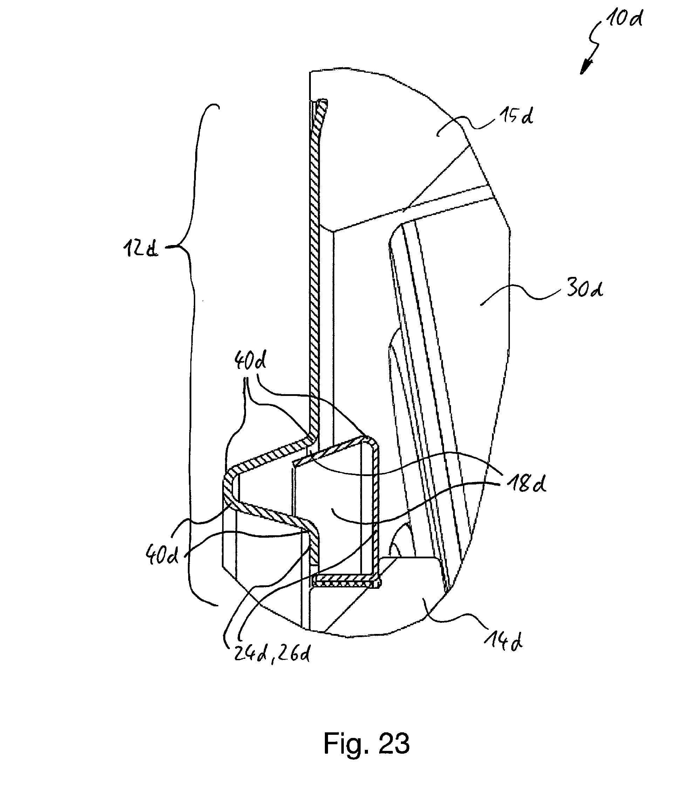

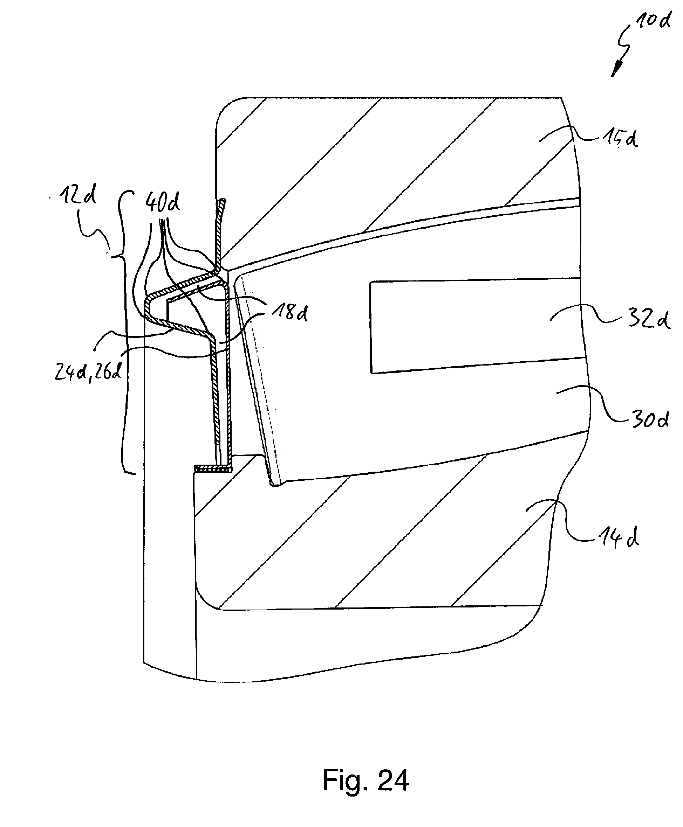

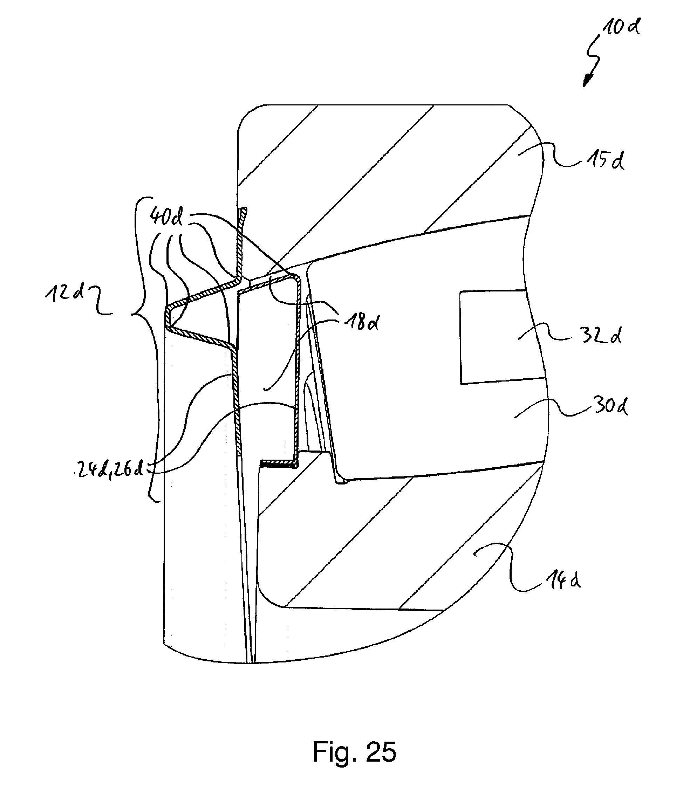

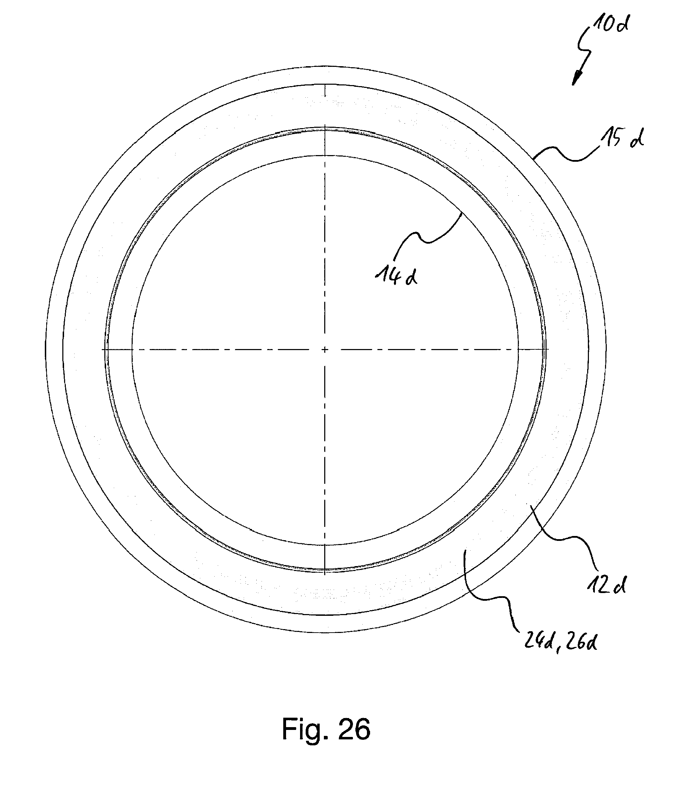

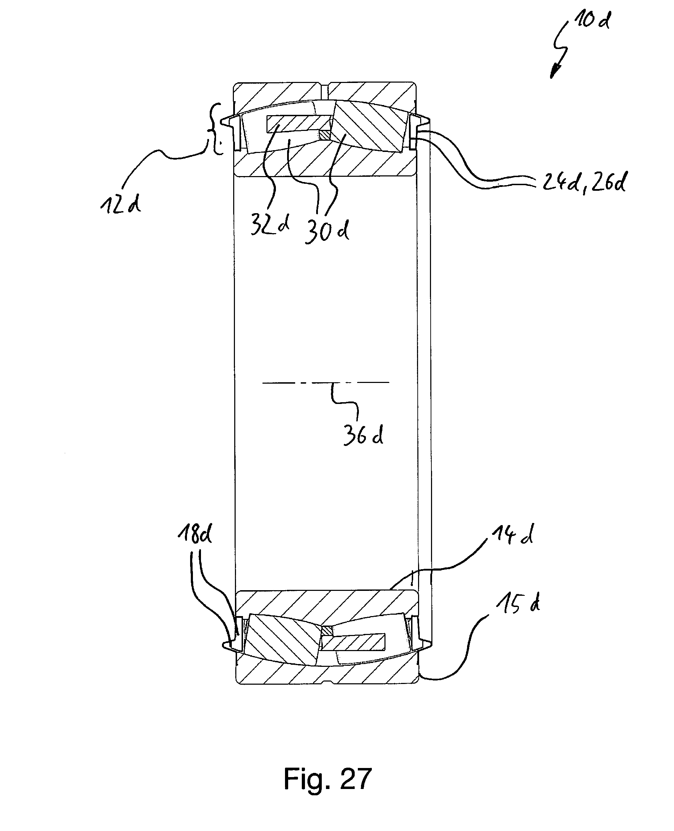

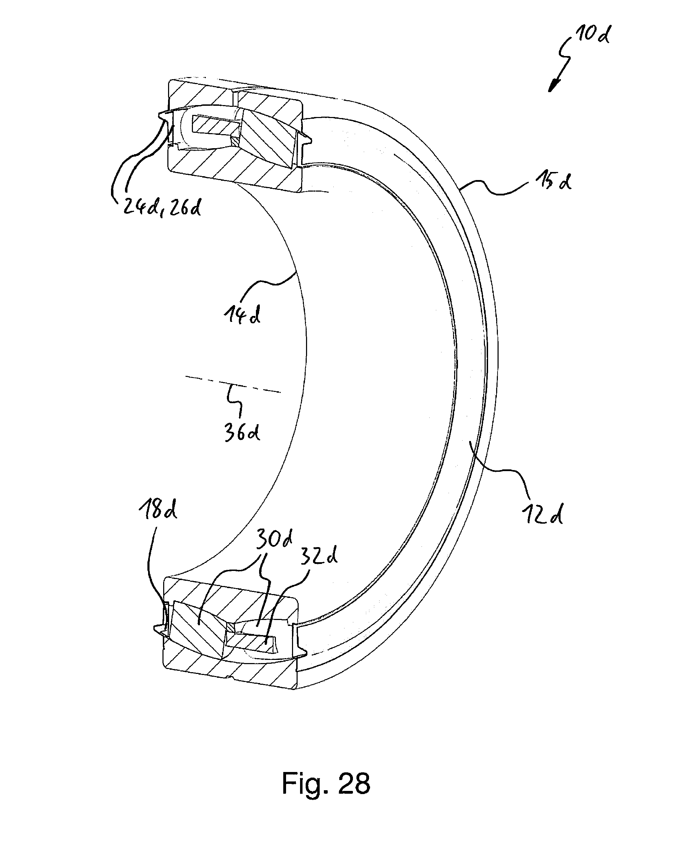

Fign. 22-28 zeigen ein viertes Ausführungsbeispiel. Fig. 22 zeigt eine Detailansicht einer Dichtungseinheit 12d in einem Wälzlager 10d. Fig. 23 zeigt eine weitere Detailansicht der Dichtungseinheit 12d in dem Wälzlager 10d. Fig. 24 zeigt ein Anwendungsbeispiel der Dichtungseinheit 12d in einem Pendelrollenlager. Fig. 25 zeigt ein weiteres Anwendungsbeispiel der Dichtungseinheit 12d in einem Pendelrollenlager. Fig. 26 zeigt das Wälzlager 10d mit der Dichtungseinheit 12d in Aufsicht. Fig. 27 zeigt einen Querschnitt durch das Wälzlager 10d mit der Dichtungseinheit 12d in Seitenansicht. Fig. 28 zeigt einen Querschnitt durch das Wälzlager 10d mit der Dichtungseinheit 12d in perspektivischer Ansicht.

Das in Fign. 22-28 gezeigte, vierte Ausführungsbeispiel beschreibt eine Dichtungseinheit 12d für ein Lager 10d, z.B. ein winkelbewegliches Großlager mit reduzierter auftretender Reibung. Die Begrenzungselemente 24d; 26d sind labyrinthförmig angeordnet, und könnten einen Schutz gegen Verschmutzung des Wälzlagers 10d ermöglichen. Die gezeigten Varianten könnten zu einem reibungsoptimierten, verbesserten oder verschleißarmen bzw. sogar verschleißfreien Betrieb führen. Dabei könnte unter der gezeigten Ausführung der Begrenzungselemente 24d; 26d, bei entsprechender Wahl der Abstände und Geometrie derselben, bei winkel- und axialbeweglichen Wälzlagern 10d wie Pendelrollenlager oder CARB Toroidalrollenlager, eine Schiefstellung von mehr als +/- 0,5° (abhängig von Geometrie) und eine axiale Verschiebbarkeit im Betrieb ermöglicht werden.

Fig. 22 zeigt eine Dichtungseinheit 12d, bei der das Element 16d einem ersten Begrenzungselement 24d entspricht. Ferner wird der Dichtspalt 18d durch ein zweites Begrenzungselement 26d begrenzt. Die Begrenzungselemente 24d und 26d können dabei beide dem Element 16d entsprechen; die Begriffe "erstes Begrenzungselement" und "zweites Begrenzungselement" sind also vertauschbar. Eines der Begrenzungselemente 24d; 26d weist hierbei gleich mehrere Richtungsänderungen 40d auf. Hierdurch entsteht eine Vförmige Ausbuchtung. Das entsprechend andere Begrenzungselement 26d; 24d weist ebenfalls eine Richtungsänderung 40d auf, sodass das Begrenzungselement 26d; 24d in einem abgewinkelten Schenkel endet. Dieser Schenkel ragt in axialer Richtung in die V-förmige Vertiefung des anderen Begrenzungselementes 24d; 26d hinein. Hierdurch erfährt der labyrinthförmige Dichtspalt 18d eine Vielzahl an Richtungsänderungen, was zu einer stark erhöhten Dichtungswirkung führen könnte. Das an dem Lagerinnenring 14d befestigte Begrenzungselement 26d; 24d ist hierbei den Wälzkörpern 30d näher gelegen als das andere Begrenzungselement 24d; 26d, welches an dem Lageraußenring 15d befestigt ist. Hierdurch könnten Kollisionen der Wälzkörper 30d mit einem der Begrenzungselemente 24d oder 26d vermieden werden.

Fig. 23 zeigt eine weitere Variante des vierten Ausführungsbeispiels, bei dem die V-förmige Ausbuchtung des Begrenzungselements 24d; 26d näher bei dem inneren Lagerring 14d liegt, als dies in Fig. 22 der Fall ist. Die Fign. 24 und 25 zeigen die Dichtungseinheit 12d in einem Pendelrollenlager 10d, bei dem der innere Lagerring 14d gegenüber dem äußeren Lagerring 15d jeweils in zwei unterschiedliche Richtungen verkippt ist. Hierbei wird deutlich, dass der Dichtspalt 18d durch seine Breite Verkippungen oder Axialbewegungen zulässt, was ein breites Spektrum an Anwendungsmöglichkeiten für die Dichtungseinheit 12d eröffnen könnte. Fig. 26 zeigt das Pendelrollenlager 10d mit der Dichtungseinheit 12d in Aufsicht.

Fig. 27 und 28 zeigen das Pendelrollenlager 10d mit der Dichtungseinheit 12d nochmals in unverschwenktem Zustand. Eine gestrichelte Linie markiert hierbei die Mittelachse 36d des Lagers 10b, die gleichzeitig dessen Rotationsachse ist.

Wie in Fig. 22 dargestellt, werden die Begrenzungselemente 24d und 26d komplex geometrisch geformt, um eine ggf. erforderliche Winkelbeweglichkeit zu ermöglichen. Das zur Umgebung orientierte Begrenzungselement 24d; 26d ist dabei bis nahe an den Innenring 14d ausgeführt. Dadurch könnte vermieden werden, dass Schmutzpartikel in der "6 Uhr"-Position (d.h. in einem unteren Bereich eines mit horizontal ausgerichteter Rotationsachse betriebenen Lagers 10d) in den Dichtspalt 18d fallen und in das Lagerinnere gefördert werden.

Die Begrenzungselemente 24d und 26d können zu Montage- und Positionierzwecken abgekantet sein. In Fig. 22 ist beispielhaft gezeigt, dass das an dem Außenring 15d montierte Begrenzungselement 24d; 26d beispielsweise um wenige Grad abgekantet ist und in einer im Außenring 15d eingebrachten Nut verstemmt ist. Dagegen ist das am Innenring 14d befestigte Begrenzungselement 26d; 24d um 90° abgekantet, so dass die Montage beispielsweise über Klebung, Klemmung, einen Presssitz o.ä. bewerkstelligt werden könnte. Ebenso möglich ist beispielsweise eine Gummierung, sodass das Begrenzungselement 26d; 24d einfach aufgeschoben und zentriert werden kann.

Beide Begrenzungselemente 24d und 26d können also jeweils in den Vertiefungen zentriert und z.B. durch Verschraubung, Klebung, Klemmung, o.ä. befestigt werden. Zwischen den Begrenzungselementen 24d und 26d bildet sich gemäß der gewählten Geometrie nahe dem Außenring ein enger Dichtspalt 18d derart aus, dass eine Schiefstellung zwischen Innenring 14d und Außenring 15d im Falle des hier beispielhaft gezeigten Pendelrollenlagers möglich ist. Die Position des Dichtspalts 18d könnte variabel sein - näher am Außenring 15d oder Innenring 14d - je nach Geometrie, Umgebungsbedingung, benötigter Schiefstellung etc.

Durch die Montage des weiter innen liegenden Begrenzungselements 26d; 24d am Innenring 14d wird im Ausführungsbeispiel der Fign. 22-28 dieses Begrenzungselement 26d; 24d bei einer Schiefstellung mitgeführt. Der Abstand dieses Begrenzungselements 26d; 24d und der Wälzkörper 30d ist in dieser Ausführung also konstant. Die maximale Schiefstellung kann durch die geometrische Wahl der Begrenzungselemente 24d und 26d bestimmt werden. Die ISO-Außenmaße des Wälzlagers 10d könnten bei der gewählten Dichtungsvariante erhalten bleiben. Die Begrenzungselemente 24d; 26d selbst ragen über die Maße des Lagers 10d hinaus, und könnten so eine erhöhte Winkelverschiebbarkeit ermöglichen

Ein in Fig. 29-35 gezeigtes, fünftes Ausführungsbeispiel beschreibt eine weitere Dichtungseinheit 12e für ein Lager 10e, z.B. ein winkelbewegliches Großlager. Die labyrinthförmig angeordneten Begrenzungselemente 24e und 26e könnten in drei verschiedenen Ausführungsvarianten einen zuverlässigen Schutz gegen Verschmutzung des Wälzlagers 10e, gerade auch in anspruchsvollen Anwendungen wie Windkraftanlagen, bieten. Ähnlich Z-förmiger Lamellen für kleinere Wälzlager könnten die gezeigten Varianten einen Betrieb mit verringerter Reibung oder verschleißarmen, bzw. -freien Betrieb ermöglichen. Dabei könnte unter entsprechender Wahl der Abstände der Begrenzungselemente 24e; 26e bei winkel- und axialbeweglichen Wälzlagern wie Pendelrollenlager oder CARB Toroidalrollenlager eine Schiefstellung von bis zu +/- 0,5° und eine axiale Verschiebbarkeit im Betrieb möglich sein.

Fig. 29 zeigt eine Detailansicht einer Dichtungseinheit 12e in einem Wälzlager 10e. Wiederum entspricht hier das Element 16e einem ersten Begrenzungselement 24e. Der labyrinthförmige Dichtspalt 18e wird ferner von einem zweiten Begrenzungselement 26e begrenzt. Die Begrenzungselemente 24e und 26e können dabei wiederum beide dem Element 16d entsprechen; die Begriffe "erstes Begrenzungselement" und "zweites Begrenzungselement" sind also vertauschbar. Die beiden Elemente 24e und 26e weisen einen sehr großen Überlapp in radialer Richtung auf. An dem inneren Lagerring 14e und dem äußeren Lagerring 15e ist jeweils ein Begrenzungselement 24e und 26e befestigt. Zwischen den Begrenzungselementen 24e, bzw. 26e und dem jeweils gegenüberliegenden Lagerring 15e oder 14e bleibt ein Abschnitt des labyrinthförmigen Dichtspalts 18e offen, der in radialer Richtung eine geringere Ausdehnung im Vergleich zur radialen Ausdehnung eines der Begrenzungselemente 24e, 26e aufweist. Hierdurch könnte die Länge des Dichtspalts 18e vergrößert oder sogar maximiert werden. Die abdichtende Wirkung könnte sich dadurch wiederum erhöhen. Durch die Breite des Dichtspalts 18e sind wiederum Axialverschiebungen des Lagers oder Verkippungen der beiden Lagerringe 14e und 15e gegeneinander (Pendelrollenlager) möglich.

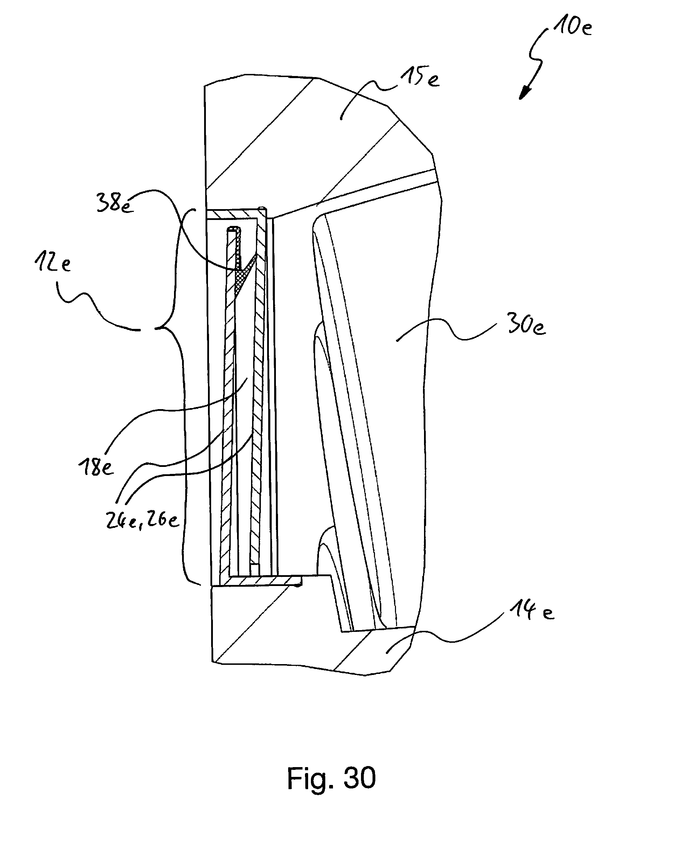

In den fünf vorgestellten Ausführungsbeispielen kann der Dichtspalt 18a; 18b; 18c; 18d; 18e zusätzlich eine Beflockung 34e und/oder eine Dichtlippe 22e; 38e aufweisen. Im manchen Ausführungsbeispielen kann dabei, wie z.B. Fig. 30 zeigt, die Dichtlippe 38e in einem Winkel geformt sein, der einen kontrollierten Ausfluss überflüssigen Schmiermittels ermöglichen, aber ein Eindringen von Verunreinigungen erschweren könnte. Sowohl die Dichtlippe 38e als auch die Beflockung 34e können sich an einer den Dichtspalt begrenzenden Seite des ersten Begrenzungselements 24e oder des zweiten Begrenzungselements 26e befinden.

In Fig. 29 sind die Begrenzungselemente 24e und 26e zu Montage- und Positionierzwecken abgekantet. Jeweils am Außenring 15e und Innenring 14e des Wälzlagers 10e kann, wie gezeigt, eine entsprechende Vertiefung eingebracht sein, so dass die Umkantung der Begrenzungselemente 24e und 26e hier positionierbar ist. Beide Begrenzungselemente 24e und 26e können jeweils in den Vertiefungen zentrierbar und z.B. durch Verschraubung, Klebung, Klemmung o.ä. fixierbar sein. Zwischen den Begrenzungselementen 24e und 26e, die planparallel zueinander angeordnet sein können, bildet sich so ein enger Dichtspalt 18e, der jedoch so dimensionierbar sein kann, dass noch eine gewünschte Schiefstellung zwischen Innenring 14e und Außenring 15e im Falle des hier gezeigten Pendelrollenlagers möglich ist.

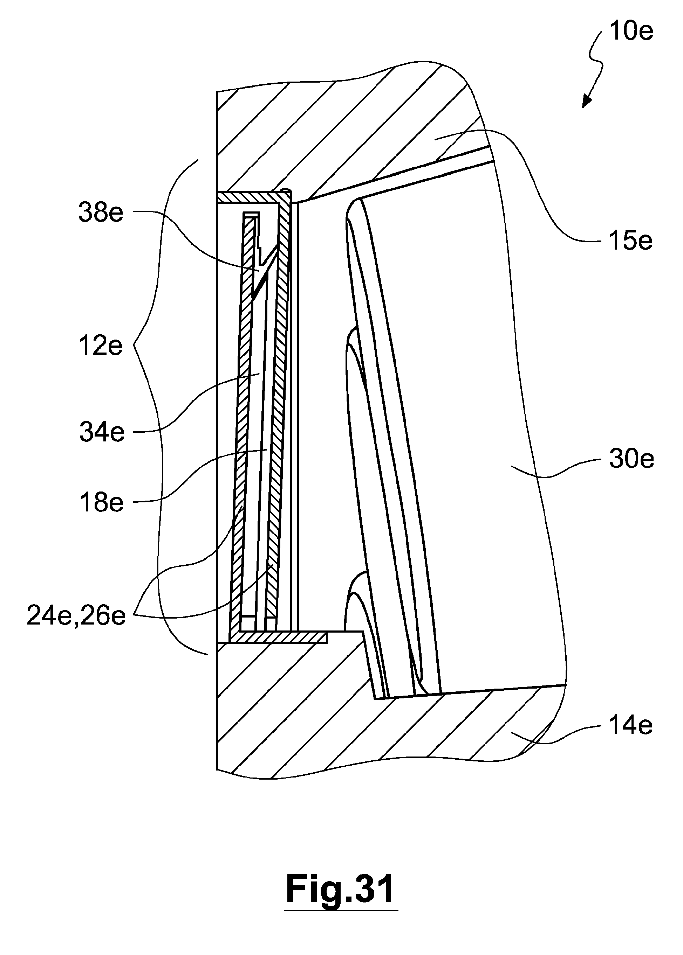

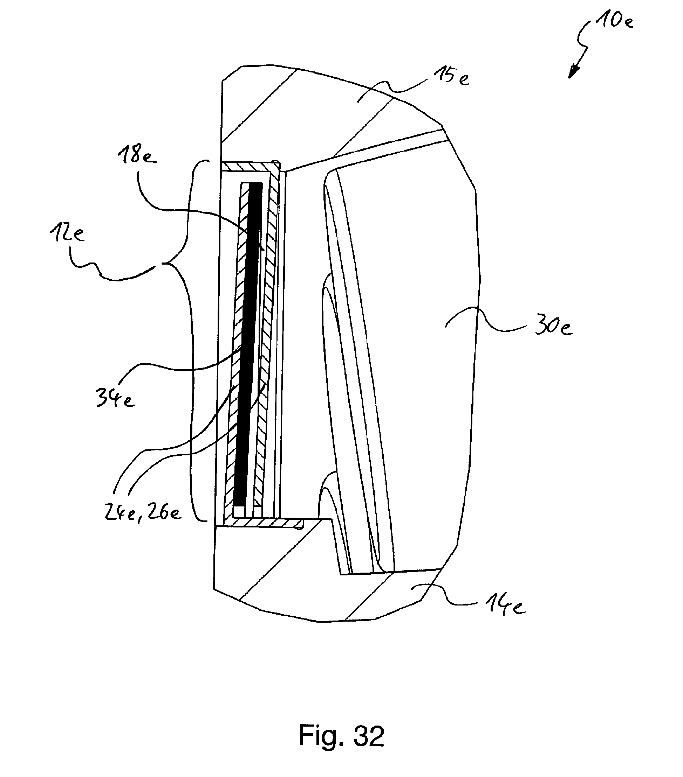

Fig. 30 zeigt eine Detailansicht einer Dichtungseinheit 12e mit Dichtlippe 38e in einem Wälzlager. Die Dichtlippe 38e ist dabei mit einem der Begrenzungselemente 24e; 26e verbunden und steht in gleitendem Kontakt zu dem jeweils anderen Begrenzungselement 26e; 24e. Die Dichtlippe 38e ermöglicht eine effektivere Abdichtung, und kann geklebt, anvulkanisiert, o.ä. sein und kann so ausführbar sein, dass bei winkelbeweglichen Lagern 10e eine Schiefstellung ermöglicht ist. Durch die in Fig. 30 gezeigte Orientierung ist ein Schmierstofffluss von Lagerinnenseite in Richtung Umgebung möglich, ebenso ein Nachschmieren des Wälzlagers 10e. Gleichzeitig kann aus der Umgebung anfallender Schmutz am Eindringen in das Lagerinnere gehemmt werden. Fig. 31 zeigt eine Detailansicht der Dichtungseinheit 12e mit Dichtlippe 38e und Beflockung 34e in dem Wälzlager 10e, welches eine weitere Erweiterungsvariante darstellt. Hier ist neben der angebrachten Dichtlippe 38e zusätzlich eine Beflockung 34e in den Zwischenraum zwischen äußerem und innerem Begrenzungselement 24e und 26e eingebracht. Damit könnte ein zusätzlicher Schutz des Lagerinnenraumes erreicht werden. Die Beflockung 34e könnte einerseits einen erhöhten Widerstand gegenüber Fremdpartikeln ermöglichen, die über den Dichtspalt ggf. in das Lagerinnere gelangen könnten. Andererseits könnte Schmierstoff verstärkt in diesem Bereich gehalten werden, wodurch eine zusätzliche Barriere gebildet werden könnte. Fig. 32 zeigt eine Detailansicht der Dichtungseinheit 12e nur mit Beflockung 34e in dem Wälzlager 10e, wie sie ebenfalls ausführbar ist.

Da bei der in Fig. 29 gezeigten Variante kein direkter Kontakt zwischen statischen und rotierenden Bauteilen vorliegt, könnten keine oder nur geringe energetische Verluste entstehen. Neben der regulären Nachschmierung des Wälzlagers 10e könnten keine weiteren Wartungsarbeiten zur Instandhaltung der Dichtungseinheit 12e notwendig sein. Bei Anwendungen mit langen geforderten Lebensdauern und gleichzeitig schwer zugänglichen Betriebslokalitäten wie beispielsweise Offshore-Windkraftanlagen könnte dies zu erheblichen Kosteneinsparungen bei Wartungsarbeiten führen. Bei den in Fign. 30-32 gezeigten Varianten kann zusätzlich die Dichtwirkung des Labyrinths erhöht werden.

Abhängig von der Wahl des Dichtspaltes 18e zwischen den Begrenzungselementen 24e und 26e könnte unter Einhaltung des ISO-Bauraums die notwendige Winkel- und Axialbeweglichkeit z.B. bei CARB Toroidal- oder Pendelrollenlagern gewährleistet werden. Bei nicht-winkelbeweglichen Wälzlagern kann der Dichtspalt 18e entsprechend enger gewählt werden und zusätzlich eine gesteigerte Dichtfunktion erzielt werden.

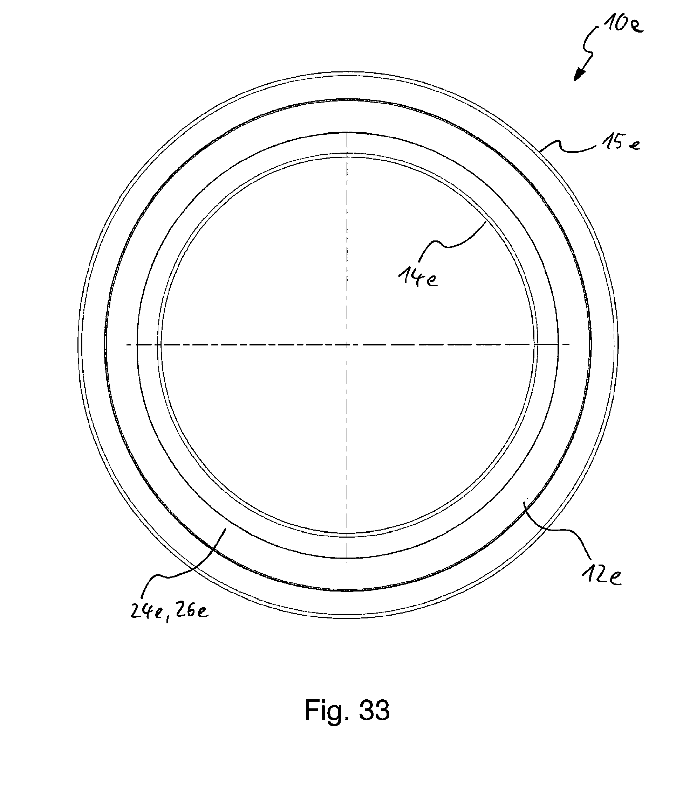

Weitere, verschiedene Ansichtsperspektiven der Dichteinheit 12e in dem Wälzlager 10e sind in den Fign. 33-35 gezeigt.

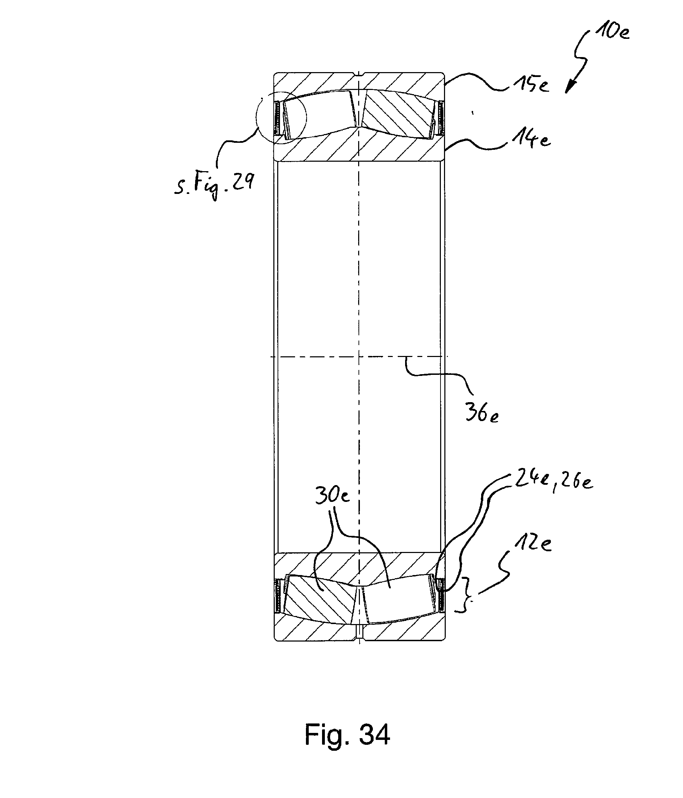

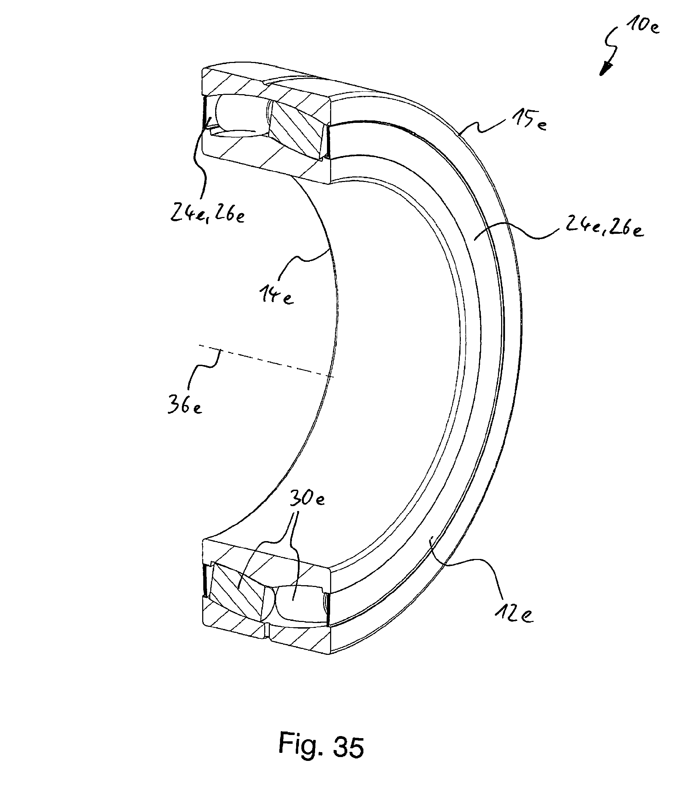

Fig. 33 zeigt das Wälzlager 10e mit der Dichtungseinheit 12e in Aufsicht. Fig. 34 zeigt einen Querschnitt durch das Wälzlager 10e mit der Dichtungseinheit 12e in Seitenansicht. Fig. 35 zeigt eine perspektivische Ansicht der Dichtungseinheit 12e in einem Wälzlager 10e.

Manche hier vorgestellten Ausführungsbeispiele, wie die in den Fign. gezeigten, ermöglichen eine einfache Integration einer verschleißresistenten Dichtungseinheit 12a; 12b; 12c; 12d; 12e in ein bestehendes Wälzlager 10a; 10b; 10c; 10d; 10e. Durch den einfachen Aufbau könnte das Konzept auf jedes Wälzlager unabhängig von Design, Lagerreihe und Durchmesser angewandt werden. Damit könnten Ausführungsbeispiele flexibel einsetzbar sein.

Im Gegensatz zu Varianten zum Abdichten von Wälzlagern mit Deckscheibe, bei denen keine Vertiefung eingearbeitet ist, könnte bei der hier vorgestellten Dichtvariante durch entsprechende Dimensionierung des Spaltes eine Dosier- oder Drosselfunktion für definierten Schmierstoffaustritt ausgebildet werden. Schmierstoff könnte somit nicht einfach ungehindert austreten, sondern durch die Mäanderstruktur einen erheblich gesteigerten Flusswiderstand erfahren.

Im Vergleich zur konventionellen Lösung der externen Labyrinthdichtung, z.B. in Windenergieanlagen, könnten sich weitere Vorteile ergeben. Der von Schmierstoff auszufüllende Raum könnte sich erheblich reduzieren, wodurch weniger Bedarf an Schmierstoff auftreten könnte. In einigen Ausführungsbeispielen ist die Dichtungseinheit 12a; 12b; 12c; 12d; 12e zudem aus leichtem Material ausgeführt. Dies könnte zu einer Materialkostenreduktion, einer Gewichtsreduzierung und damit zu einer erleichterten, zeiteffizienten Montage führen. Eine werkseitige Vorbefettung könnte das Risiko einer Verunreinigung während der Montage des sonst ungedichteten, offenen Lagers mindern.

Durch das in einigen Ausführungsbeispielen vorgeschlagene, aufwandsgünstige Dichtungsdesign könnte die Möglichkeit einer Massenproduktion der Dichtungseinheit 12a; 12b; 12c; 12d; 12e, z.B. mittels Stanzen, bestehen. Auch bei geringen Stückzahlen könnte die Dichtungseinheit 12a; 12b; 12c; 12d; 12e beispielsweise durch Laserschneiden kostengünstig gefertigt werden.

Das Design könnte in den gezeigten Ausführungsbeispielen außerdem eine rudimentäre Zentrierung der Dichtungseinheit 12a; 12b; 12c; 12d; 12e zulassen. Eine hochgenaue Positionierung der Dichtungseinheit 12a; 12b; 12c; 12d; 12e relativ zum Innenring 14a; 14b; 14c; 14d; 14e könnte umgangen werden. Folglich könnten kostenintensiven Bearbeitungsschritte am Wälzlagerinnenring und Außenring entfallen. Die erforderlichen Vertiefungen könnten mittels spanender Fertigungsverfahren wie beispielsweise Weichdrehen vor dem Härten ausgeführt werden.

### Bezugszeichenliste

- 10a; 10b; 10c; 10d; 10e: Wälzlager
- 12a; 12b; 12c; 12d; 12e: Dichtungseinheit
- 14a; 14b; 14c; 14d; 14e: Innerer Lagerring
- 15a; 15b; 15c; 15d; 15e: Äußerer Lagerring
- 16a; 16b; 16c; 16d; 16e: Element
- 18a; 18b; 18c; 18d; 18e: Dichtspalt
- 20a; 20c: Vertiefung
- 22a; 22c: Dichtlippe
- 23b; 23d; 23e: Dichtfläche
- 24b; 24d; 24e: erstes Begrenzungselement
- 26b; 26d; 26e: zweites Begrenzungselement
- 28b: drittes Begrenzungselement
- 30a; 30b; 30c; 30d; 30e: Wälzkörper
- 32a; 32b; 32c; 32d; 32e: Lagerkäfig
- 34e: Beflockung
- 36a; 36b; 36c; 36d; 36e: Mittelachse
- 38e: Dichtlippe
- 112: Großlager
- 114: Labyrinthring
- 116: V-Ring
- 120: Lagerring
- 130: Wälzkörper
- 140: Labyrinth

## Patentansprüche

1. Wälzlager (10a; 10b; 10c; 10d; 10e) mit Dichtungseinheit (12a; 12b; 12c; 12d; 12e), wobei das Wälzlager (10a; 10b; 10c; 10d; 10e) mindestens einen Lagerring (14a; 14b; 14c; 14d; 14e; 15a; 15b; 15c; 15d; 15e) und einen zu dem Lagerring (14a; 14b; 14c; 14d; 14e; 15a; 15b; 15c; 15d; 15e) um einen begrenzten Winkel verkippbaren weiteren Lagerring (15a; 15b; 15c; 15d; 15e; 14a; 14b; 14c; 14d; 14e) umfasst, und wobei die Dichtungseinheit (12a; 12b; 12c; 12d; 12e) ein an dem Lagerring (14a; 14b; 14c; 14d; 14e; 15a; 15b; 15c; 15d; 15e) befestigtes, zumindest teilringförmiges Element (16a; 16b; 16c; 16d; 16e) umfasst, wobei das zumindest teilringförmige Element (16a; 16b; 16c; 16d; 16e) einen labyrinthförmigen Dichtspalt (18a; 18b; 18c; 18d; 18e) begrenzt, wobei das Element (16b; 16d; 16e) einem ersten Begrenzungselement (24b; 24d; 24e) entspricht, und das Wälzlager (10b; 10d; 10e) ferner ein zweites Begrenzungselement (26b; 26d; 26e) und ein an einem Lagerkäfig (32b) befestigtes drittes Begrenzungselement (28b) aufweist, und wobei sich der Dichtspalt (18b) zumindest teilweise zwischen dem ersten Begrenzungselement (24b), dem zweiten Begrenzungselement (26b) und dem dritten Begrenzungselement (28b) erstreckt.

2. Wälzlager (10a; 10b; 10c; 10d; 10e) gemäß Anspruch 1, wobei der Dichtspalt (18a; 18b; 18c; 18d; 18e) zumindest teilweise derart verläuft, dass der Dichtspalt (18a; 18b; 18c; 18d; 18e) den Lagerring (14a; 14b; 14c; 14d; 14e; 15a; 15b; 15c; 15d; 15e) in axialer Richtung nicht überragt und/oder das Element (16a; 16b; 16c; 16d; 16e) blechartig ausgebildet ist.

3. Wälzlager (10a; 10c) gemäß einem der Ansprüche 1 bis 2, wobei der Dichtspalt (18a; 18c) zusätzlich durch eine Vertiefung (20a; 20c) in dem Lagerring (14a; 14c; 15a; 15c) begrenzt wird und/oder wobei der Lagerring (14a; 14c; 15a; 15c) eine mit dem Element (16a; 16c) in Anlage stehende Dichtlippe (22a; 22c) aufweist.

4. Wälzlager (10b; 10c; 10d) gemäß einem der vorangegangenen Ansprüche, wobei das Element (16b; 16c; 16d) entlang seines Verlaufes eine Richtungsänderung (40b; 40c; 40d) von wenigstens 45 Grad aufweist.

5. Wälzlager (10a; 10b; 10c; 10d; 10e) gemäß einem der vorangegangenen Ansprüche, wobei der Dichtspalt (18a; 18b; 18c; 18d; 18e) zusätzlich eine Beflockung (34e) und/oder eine Dichtlippe (22a; 22c; 38e) aufweist.

6. Wälzlager (10a; 10b; 10c; 10d; 10e) gemäß einem der vorangegangenen Ansprüche, wobei zumindest das Element (16a; 16b; 16c; 16d; 16e) austauschbar an dem Lagerring (14a; 14b; 14c; 14d; 14e; 15a; 15b; 15c; 15d; 15e) befestigt ist.

7. Wälzlager (10a; 10b; 10c; 10d; 10e) gemäß einem der vorangegangenen Ansprüche, wobei das Wälzlager (10a; 10b; 10c; 10d; 10e) einen Außendurchmesser von mindestens 400 Millimetern aufweist.
